# EUROPÄISCHE PATENTSCHRIFT

(11) **EP 4 142 561 B1**
(45) Veröffentlichungstag und Bekanntmachung des Hinweises auf die Patenterteilung: **23.07.2025**
(21) Anmeldenummer: 21716987.9
(22) Anmeldetag: 30.03.2021
(51) Int. Cl.: A47L 13/51, B62B 3/02

(54) **VERBINDUNGSEINRICHTUNG ZUM VERBINDEN VON REINIGUNGSWAGEN UND REINIGUNGSSYSTEM MIT ZWEI ODER MEHR REINIGUNGSWAGEN**
CONNECTION DEVICE FOR CONNECTING CLEANING TROLLEYS AND CLEANING SYSTEM COMPRISING TWO OR MORE CLEANING TROLLEYS
DISPOSITIF DE RACCORDEMENT PERMETTANT DE RACCORDER DES CHARIOTS DE NETTOYAGE ET SYSTÈME DE NETTOYAGE COMPRENANT AU MOINS DEUX CHARIOTS DE NETTOYAGE

(30) Priorität: 29.04.2020 DE 102020111727
(43) Veröffentlichungstag der Anmeldung: 08.03.2023
(73) Patentinhaber: Alfred Kärcher SE & Co. KG, 71364 Winnenden (DE)
(72) Erfinder: ARMBRUSTER, Patrick, 71364 Winnenden (DE); BURCHARD, Jochen, 71364 Winnenden (DE); DAMMKÖHLER, Denis, 71364 Winnenden (DE); DOBLER, Kamila, 71364 Winnenden (DE); GUEGERCIN, Beyza, 71364 Winnenden (DE); JAHN, Marten, 71364 Winnenden (DE); KUHN, Jens, 71364 Winnenden (DE); MANISCALCO, Calogero, 71364 Winnenden (DE)
(74) Vertreter: DTS Patent- und Rechtsanwälte PartmbB
(86) Internationale Anmeldenummer: PCT/EP2021/058290
(87) Internationale Veröffentlichungsnummer: WO 2021/219314

(56) Entgegenhaltungen:
- EP-A1- 3 095 668
- EP-A1- 3 453 587
- EP-A2- 1 841 634
- DE-U1- 9 403 468

## Beschreibung

Die vorliegende Erfindung betrifft eine Verbindungseinrichtung zum Verbinden eines ersten Reinigungswagens mit einem zweiten Reinigungswagen.

Außerdem betrifft die vorliegende Erfindung ein Reinigungssystem mit zwei oder mehr Reinigungswagen, die mittels einer Verbindungseinrichtung verbindbar sind.

Trotz moderner Reinigungsmaschinen insbesondere im Bereich der Innenreinigung, die zum Teil automatisiert sein können, sind Reinigungswagen im Bereich täglicher Reinigung von großer Bedeutung. Hervorzuheben sind insbesondere manuell durchzuführende Reinigungsaufgaben in größeren Gebäuden, zum Beispiel Bürogebäuden, Hotels, Pflegeeinrichtungen, Krankenhäusern, Flughäfen, Veranstaltungsgebäuden oder dergleichen. Die Reinigungswagen dienen dazu, Reinigungsutensilien mitzuführen. Beispiele hierfür sind insbesondere manuell geführte Reinigungswerkzeuge, Behältnisse zur Bevorratung von Reinigungszubehör, Reinigungsflüssigkeiten oder Reinigungschemikalien, Behältnisse zur Aufnahme von Schmutzflüssigkeit oder Abfall, Reinigungstücher oder andere Gegenstände zur Oberflächenreinigung.

Die Reinigungswagen umfassen Rollen, so dass sie von einem Benutzer handgeführt über eine Bodenfläche verfahren werden können. Bei verbundenen Reinigungswagen ist hierzu bevorzugt an zumindest einem Reinigungswagen eine Griffeinrichtung für den Benutzer angeordnet oder gebildet.

Die Rollen der Reinigungswagen können im vorliegenden Fall feststehend, d.h. ungelenkt sein. Alternativ kann vorgesehen sein, dass die Rollen Lenkrollen sind. Auch eine Mischung von ungelenkten Rollen und Lenkrollen kann vorgesehen sein.

Die Reinigungswagen umfassen üblicherweise einen Rahmen zum Aufnehmen der Reinigungsutensilien. Als Rahmen kann vorliegend ein offener Rahmen, beispielsweise zur Anordnung von Behältnissen, angesehen werden. Als Rahmen kann vorliegend insbesondere auch ein geschlossener Rahmen im Sinne eines Korpus angesehen werden, der zum Beispiel Seitenwände und/oder Türen zum Verschließen eines Aufnahmeraums für Reinigungsutensilien umfasst.

Bekannt ist es, dass Reinigungswagen miteinander verbunden werden können. Beispielsweise können zwei oder mehr Reinigungswagen von einem Rüstort zu einem Einsatzort verfahren und dort zur Erfüllung unterschiedlicher Reinigungsaufgaben voneinander getrennt werden. Bekannt ist es auch, dass Reinigungswagen entsprechend der durchzuführenden Reinigungsaufgabe und Trennung von Sauberbereich und Schmutzbereich als Versorgungsmodul und Entsorgungsmodul miteinander verbunden sind. Im Versorgungsmodul können Reinigungswerkzeuge und insbesondere saubere Reinigungsutensilien untergebracht sein. Das Entsorgungsmodul kann schmutzige Reinigungsutensilien und/oder ein Behältnis zur Aufnahme von Abfall aufnehmen. Nach der Reinigung kann das Entsorgungsmodul vom Versorgungsmodul beispielsweise getrennt, etwaiger Abfall entsorgt und Reinigungsutensilien gereinigt werden, um eine Kreuzkontamination zu vermeiden.

Es ist bekannt, dass Reinigungswagen bodennah über eine mittels einer Fußbetätigung verbindbare Verbindungseinrichtung verbunden werden können. Dies erweist sich in der Praxis als umständlich, weil dem Benutzer die Sicht verwehrt ist und die korrekte Relativpositionierung dem Benutzer Schwierigkeiten bereitet, insbesondere weil der vom Benutzer nicht geführte Reinigungswagen aufgrund der Rollen unbeabsichtigterweise auf der Bodenfläche verfahren kann. Bei einer andersartigen Verbindungseinrichtung ist ein Bügel vorgesehen, der an einer Stange des anderen Reinigungswagens eingehängt werden kann. Auf diese Weise kann nur eine unzuverlässige Verbindung erfolgen.

Verbindungseinrichtungen für Reinigungswagen sind zum Beispiel in der EP 3 453 587 A1, der US 2017/0151974 A1, der EP 3 095 668 B1, der DE 94 03 468 U1 und der GB 2 497 132 A beschrieben. Die EP 1 841 634 A2 beschreibt eine Verbindungseinrichtung für einen Reinigungswagen mit einem Wagen für Zubehör.

Aufgabe der vorliegenden Erfindung ist es, eine Verbindungseinrichtung zum Verbinden von Reinigungswagen und ein Reinigungssystem bereitzustellen, mit dem eine benutzerfreundlichere Verbindung der Reinigungswagen ermöglicht ist.

Diese Aufgabe wird durch eine erfindungsgemäße Verbindungseinrichtung mit den Merkmalen von Anspruch 1 gelöst.

Nachfolgende Ausführungen werden unter der Annahme eines bestimmungsgemäßen Gebrauches der Verbindungseinrichtung mit den Reinigungswagen und dementsprechend unter der Annahme eines bestimmungsgemäßen Gebrauches des Reinigungssystems gemacht. Hierbei kann insbesondere vorgesehen sein, dass die Reinigungswagen bestimmungsgemäß über die Rollen auf einer Bodenfläche aufstehen. Nicht-limitierend kann dabei angenommen werden, dass die Bodenfläche horizontal ausgerichtet ist.

In die vorliegende Erfindung fließt die Überlegung mit ein, dass die Reinigungswagen, um miteinander verbunden werden zu können, einander vorzugsweise in einer definierten Verbindungsrichtung anzunähern sind. Für die Verbindung ist eine Verbindungseinrichtung mit einem ersten Verbindungsteil und einem zweiten Verbindungsteil vorgesehen. Über einen jeweiligen Basisbereich kann die Verbindungseinrichtung am ersten bzw. am zweiten Reinigungswagen festgelegt oder festlegbar sein. Dabei sind die Verbindungsteile vorzugsweise jeweils in definierter Position am Reinigungswagen angeordnet.

Vom Basisbereich springt ein erster Vorsprungbereich am ersten Verbindungsteil und ein zweiter Vorsprungbereich am zweiten Verbindungsteil in Richtung des jeweils anderen Verbindungsteils hervor. Quer und insbesondere senkrecht zur Verbindungsrichtung sind die Vorsprungbereiche seitlich nebeneinander angeordnet. Diese nachfolgend als Querrichtung bezeichnete Richtung ist vorzugsweise parallel zu einer von den Rollen definierten Kontaktebene des jeweiligen Reinigungswagens ausgerichtet, insbesondere horizontal. Durch die Positionierung der Vorsprungbereiche seitlich nebeneinander in der Querrichtung hat der Benutzer beim Verbinden der Reinigungswagen miteinander eine einfache und zuverlässige Kontrolle über deren Relativausrichtung. Es zeigt sich in der Praxis, dass auf diese Weise die Ausrichtung der Reinigungswagen erheblich vereinfacht wird. Dies gilt ebenso für die Relativpositionierung der Verriegelungselemente, die an den Vorsprungbereichen angeordnet sind. Durch Anordnung der Vorsprungbereiche seitlich nebeneinander kann der Benutzer die Verriegelungselemente handhabungsfreundlich in eine Relativposition bringen, so dass die Verriegelungselemente die Verriegelungsstellung einnehmen können.

Um einem Benutzer die Ausrichtung der Verbindungsteile und damit der Reinigungswagen relativ zueinander zu erleichtern, ist es von Vorteil, wenn der erste Vorsprungbereich und der zweite Vorsprungbereich, in der Querrichtung, unmittelbar seitlich nebeneinander angeordnet sind.

Insbesondere ist vorzugsweise vorgesehen, dass kein Vorsprungbereich eines Verbindungsteils zu beiden Seiten des Vorsprungbereiches des weiteren Verbindungsteils angeordnet ist. Dies erleichtert die Relativausrichtung der Verbindungsteile zueinander.

Der jeweilige Vorsprungbereich kann vorzugsweise einstückig mit dem zugeordneten Basisbereich verbunden sein.

Vorgesehen sein kann, dass der Basisbereich einen Sockel ausbildet, relativ zu dem der Vorsprungbereich hervorspringt.

Alternativ kann vorgesehen sein, dass der Basisbereich und der Vorsprungbereich in einer Ebene quer und insbesondere senkrecht zur Verbindungsrichtung einen gleichen oder im Wesentlichen gleichen Querschnitt aufweisen.

Günstig ist es, wenn die Vorsprungbereiche des ersten Verbindungsteils und des zweiten Verbindungsteils seitlich über korrespondierende Anlageelemente aneinander anliegen. Auf diese Weise kann benutzerfreundlich eine zuverlässige Relativpositionierung der Verbindungsteile sichergestellt werden. Insbesondere können die Vorsprungbereiche flächig aneinander anliegen.

Von Vorteil ist es, wenn zumindest einer der Vorsprungbereiche im Bereich des Anlageelementes ausgehend vom Basisbereich in Richtung des jeweils anderen Verbindungsteils eine Verjüngung aufweist. Über die Verjüngung verschmälert sich der Querschnitt des Vorsprungbereiches in Richtung des weiteren Verbindungsteils. Auf diese Weise wird die Relativausrichtung der Verbindungsteile beim Annähern der Reinigungswagen erleichtert. Beispielsweise kann die Verjüngung dadurch erzielt werden, dass zumindest eines der vorstehend genannten Anlageelemente relativ zur Verbindungsrichtung eine Neigung aufweist. Die Neigung kann relativ zur Verbindungsrichtung beispielsweise einen Winkel von ungefähr 10° bis 40° einnehmen. Das geneigte Anlageelement kann als Ausrichthilfe für den jeweils anderen Vorsprungbereich dienen.

Vorzugsweise können beide Vorsprungbereiche eine Verjüngung der vorstehend beschriebenen Art aufweisen.

Vorteilhaft kann es sein, dass zumindest einer der Vorsprungbereiche an einer dem Basisbereich abgewandten Seite Abschrägungen aufweist, um die Relativausrichtung der Verbindungsteile beim Annähern aneinander zu erleichtern. Die Abschrägungen sind beispielsweise Fasen an einer Stirnseite des entsprechenden Vorsprungbereiches, die dem Basisbereich des Verbindungsteils abgewandt ist.

Sofern nachfolgend nicht anders erläutert, wird von den Verbindungsteilen im miteinander verbundenen Zustand ausgegangen.

Vorteilhaft ist es, wenn die Verriegelungselemente manuell und/oder werkzeuglos in die Verriegelungsstellung und/oder die Entriegelungsstellung überführbar sind.

Das erste Verriegelungselement und das zweite Verriegelungselement können miteinander in der Verriegelungsstellung beispielsweise kraft- und/oder formschlüssig in Eingriff stehen.

Vorgesehen sein kann eine Verklemmung und/oder Verrastung des ersten Verriegelungselementes und des zweiten Verriegelungselementes in der Verriegelungsstellung miteinander.

Bei einer bevorzugten Ausführungsform ist es günstig, wenn das erste Verriegelungselement und das zweite Verriegelungselement einen an einem der Vorsprungbereiche beweglich angeordneten Verriegelungsvorsprung und eine am jeweils anderen Vorsprungbereich angeordnete Aufnahme für den Vorsprung umfassen. In der Verriegelungsstellung kann der Vorsprung in die Aufnahme eingreifen. In der Entriegelungsstellung ist der Vorsprung außer Eingriff mit der Aufnahme.

Insbesondere kann vorgesehen sein, dass das erste Verriegelungselement der Vorsprung ist und das zweite Verriegelungselement die Aufnahme. Dementsprechend kann am (ersten) Vorsprungbereich des ersten Verbindungsteils der Vorsprung angeordnet sein und am (zweiten) Vorsprungbereich des zweiten Verbindungsteils die Aufnahme.

Alternativ kann das erste Verriegelungselement die Aufnahme sein und das zweite Verriegelungselement der Vorsprung.

Der Vorsprung ist bei einer bevorzugten Ausführungsform der Erfindung als Verriegelungsstift ausgestaltet, die Aufnahme als Sackloch oder als Durchgangsöffnung am Vorsprungbereich.

Günstig ist es, wenn der Vorsprung und die Aufnahme jeweils einen runden und insbesondere kreisrunden Querschnitt aufweisen. Dies erleichtert das Einführen des Vorsprungs in die Aufnahme.

Der runde und insbesondere kreisrunde Querschnitt kann sich beispielsweise als vorteilhaft erweisen, wenn die Verbindungsteile relativ zueinander um eine vom Vorsprung und der Aufnahme definierte gemeinsame Schwenkachse verschwenkbar sind.

Mindestens ein Verriegelungselement ist vorzugsweise beweglich und insbesondere verschieblich am Vorsprungbereich gelagert. Durch die bewegliche Lagerung kann eine zuverlässige Funktion der Verbindungseinrichtung sichergestellt werden. Beispielsweise ist der vorstehend genannte Vorsprung beweglich oder verschieblich gelagert.

Das erste Verriegelungselement und das zweite Verriegelungselement, insbesondere der Vorsprung und die Aufnahme, sind bevorzugt koaxial bezüglich einer gemeinsamen Achse zueinander ausgerichtet. Beispielsweise kann der Vorsprung relativ zur Aufnahme entlang der gemeinsamen Achse verschiebbar sein.

Um die gemeinsame Achse ist insbesondere das erste Verriegelungselement relativ zum zweiten Verriegelungselement drehbar.

Günstigerweise sind das erste Verbindungsteil und das zweite Verbindungsteil relativ zueinander um die Achse schwenkbar zueinander ausgestaltet. Dies ermöglicht es vorzugsweise insbesondere, dass die Reinigungswagen relativ zueinander um die Achse geschwenkt werden können. Auf diese Weise können Unebenheiten der Bodenfläche, Schwellen und/oder Rampen besser mit den verbundenen Reinigungswagen überfahren werden. Hierbei wird die Schwenkachse insbesondere von den beiden Verriegelungselementen definiert.

Die Achse ist vorzugsweise quer und insbesondere senkrecht zur Verbindungsrichtung ausgestaltet, speziell in der Querrichtung.

Die Achse ist vorzugsweise parallel zu einer von Rollen der Reinigungswagen definierten Kontaktebene zum Aufstellen auf der Bodenfläche ausgerichtet. Hierbei kann es sich insbesondere um eine Horizontalachse handeln, wenn die Bodenfläche horizontal ausgerichtet ist.

Die Verriegelungselemente sind bei einer bevorzugten Ausführungsform quer und insbesondere senkrecht zur Verbindungsrichtung ausgerichtet, speziell in der Querrichtung. Hierbei kann beispielsweise der Vorsprung in der Querrichtung in die Aufnahme eingreifen.

Als vorteilhaft erweist es sich, wenn ein Vorsprungbereich eines Verbindungsteils und ein Basisbereich des anderen Verbindungsteiles korrespondierende Anlageelemente ausbilden, wobei der Vorsprungbereich mit einer Stirnseite am Basisbereich anliegt. Dies gibt die Möglichkeit einer zuverlässigen Relativpositionierung der Verbindungsteile entlang der Verbindungsrichtung. Hierbei kann der Vorsprungbereich mit einem dem Basisbereich desselben Verbindungsteils abgewandten stirnseitigen Anlageelement an dem Anlageelement des Basisbereichs des jeweils anderen Verbindungsteils anliegen.

Vorzugsweise bilden ein jeweiliger Vorsprungbereich und der Basisbereich des jeweils anderen Verbindungsteils korrespondierende Anlageelemente aus. Auf diese Weise kann jeder Vorsprungbereich am Basisbereich des jeweils anderen Verbindungsteils anliegen.

Günstig ist es, wenn die Anlageelemente korrespondierende Lagerelemente beim Verschwenken der Verbindungsteile relativ zueinander ausbilden. Auf diese Weise kann eine Schwenkbewegung der Verbindungsteile zueinander geführt und zuverlässig ausgeführt werden. Beispielsweise bildet das Anlageelement am Basisbereich eine Lagerschale, und der Vorsprungbereich bildet einen Lagervorsprung, oder umgekehrt. Vorgesehen sein kann beispielsweise, dass die Lagerschale und der Lagervorsprung eine Form eines Zylindermantels aufweisen.

Vorteilhafterweise ist das erste Verriegelungselement beim Verbinden der Verbindungsteile miteinander selbsttätig zur Einnahme der Verriegelungsstellung mit dem zweiten Verriegelungselement in Eingriff bringbar. Auf diese Weise kann ohne Zutun eines Benutzers eine Verbindung der Verbindungsteile erfolgen und die Handhabung der Verbindungseinrichtung verbessert werden.

Günstig ist es, wenn die Verbindungseinrichtung ein Vorspannelement umfasst und wenn das erste Verriegelungselement über das Vorspannelement in Richtung auf die Verriegelungsstellung vorgespannt ist. Das erste Verriegelungselement nimmt dadurch in Abwesenheit einer zusätzlichen Kraft die Verriegelungsstellung ein, um eine gesicherte Verbindung der Verbindungsteile miteinander zu ermöglichen.

Am Vorsprungbereich und am ersten Verriegelungselement sind vorteilhafterweise Anschläge für das Vorspannelement angeordnet oder gebildet.

Vorzugsweise kann das Vorspannelement als ein Federelement ausgestaltet sein, das das als Verriegelungsstift ausgestaltete erste Verriegelungselement abschnittsweise umgibt und sich an diesem und am ersten Vorsprungbereich abstützt. Das Federelement ist beispielsweise eine Schraubenfeder und bevorzugt als Druckfeder ausgestaltet.

Vorteilhaft kann es sein, wenn das erste Verriegelungselement ein vorzugsweise stirnseitiges Aufgleitelement umfasst, welches der zweite Vorsprungbereich beim Verbinden der Verbindungsteile mechanisch kontaktiert und dadurch das erste Verriegelungselement entgegen der Wirkung des Vorspannelementes in die Entriegelungsstellung verschiebt. Dies erleichtert die Verbindung der Verbindungsteile miteinander. Das erste Verriegelungselement wird in die Entriegelungsstellung überführt. Bei korrekter Relativpositionierung der Verbindungsteile kann das Verriegelungselement unter der Wirkung des Vorspannelementes zur selbsttätigen Verriegelung in Eingriff mit dem zweiten Verriegelungselement gebracht werden.

Das Aufgleitelement kann beispielsweise eine Aufgleitfläche sein oder umfassen.

Die Verriegelungselemente sind am ersten Vorsprungbereich bzw. am zweiten Vorsprungbereich vorzugsweise unverlierbar gehalten.

Günstig ist es, wenn an mindestens einem der Verbindungsteile ein Stützelement angeordnet ist und wenn der Vorsprungbereich des jeweils anderen Verbindungsteils zwischen dem Vorsprungbereich des erstgenannten Verbindungsteils und dem Stützelement angeordnet ist. Quer und insbesondere senkrecht zur Verbindungsrichtung sind die Vorsprungbereiche seitlich nebeneinander angeordnet, wobei der Vorsprungbereich zumindest eines Verbindungsteils zwischen dem Vorsprungbereich des anderen Verbindungsteils und dem an diesem Verbindungsteil angeordneten Stützelement angeordnet ist. Vorzugsweise kann der in dem Zwischenraum angeordnete Vorsprungbereich gegen eine Bewegung quer und insbesondere senkrecht zur Verbindungsrichtung weg von dem anderen Vorsprungbereich zumindest soweit gesichert werden, dass die Verriegelungselemente nicht außer Eingriff geraten.

An jedem der beiden Verbindungsteile kann mindestens ein derartiges Stützelement angeordnet sein.

Das Stützelement steht beispielsweise vom Basisbereich des Verbindungsteils in Richtung des jeweils anderen Verbindungsteils ab.

Beispielsweise ist das Stützelement scheibenförmig oder stegförmig ausgebildet.

Ein Zwischenraum zwischen dem Vorsprungbereich und dem Stützelement des diese beiden aufweisenden Verbindungsteils ist vorzugsweise gleich oder im Wesentlichen gleich breit wie der in diesen Zwischenraum eingreifende Vorsprungbereich des jeweils anderen Verbindungsteils. Beispielsweise greift der Vorsprungbereich formschlüssig in den Zwischenraum ein, wenn die Verbindungsteile miteinander verbunden sind.

Das Stützelement kann, wenn die Verbindungsteile miteinander verbunden werden, bevorzugt ein Führungselement für den in den Zwischenraum eingreifenden Vorsprungbereich ausbilden, um eine Verbindung der Verbindungsteile miteinander zu erleichtern.

Bei einer bevorzugten Ausführungsform der erfindungsgemäßen Verbindungseinrichtung ist zum Beispiel vorgesehen, dass der zweite Vorsprungbereich des zweiten Verbindungsteils in den Zwischenraum zwischen dem ersten Vorsprungbereich des ersten Verbindungsteils und einem daran angeordneten Stützelement eingreift.

Alternativ oder ergänzend kann vorgesehen sein, dass am zweiten Verbindungsteil ein Stützelement angeordnet ist und dass der erste Vorsprungbereich des ersten Verbindungsteils in einen Zwischenraum zwischen diesem Stützelement und dem zweiten Vorsprungbereich eingreift.

Die Verbindungseinrichtung umfasst bevorzugt ein mit dem ersten Verriegelungselement in Wirkverbindung stehendes Löseelement, wobei das erste Verriegelungselement mittels des Löseelementes von der Verriegelungsstellung in die Entriegelungsstellung überführbar ist. Das Löseelement kann vorzugsweise vom Benutzer betätigt werden, um die Verriegelungselemente in die Entriegelungsstellung zum Lösen der Reinigungswagen voneinander zu überführen.

Günstigerweise ist das Löseelement manuell und/oder werkzeuglos betätigbar.

Das Löseelement ist am ersten Vorsprungbereich bevorzugt beweglich und insbesondere verschieblich gelagert. Auf diese Weise kann eine zuverlässige Funktion der Verbindungseinrichtung sichergestellt werden.

Von Vorteil ist es, wenn das Löseelement quer und insbesondere senkrecht zu einer Verschieberichtung des ersten Verriegelungselementes verschiebbar ist, um das erste Verriegelungselement in die Entriegelungsstellung zu überführen. Beispielsweise ist die Bewegungsrichtung des Löseelementes quer und insbesondere senkrecht zur Verbindungsrichtung ausgerichtet. Die Bewegungsrichtung kann alternativ oder ergänzend quer und insbesondere senkrecht zur Querrichtung ausgerichtet sein. Beispielsweise ist die Bewegungsrichtung quer und insbesondere senkrecht zu der von den Rollen des Reinigungswagens definierten Kontaktebene und insbesondere in einer Höhenrichtung ausgerichtet.

Das Löseelement und das erste Verriegelungselement umfassen bevorzugt zusammenwirkende Aufgleitelemente und liegen über diese an einander an. Die jeweiligen Aufgleitelemente sind bevorzugt geneigt zu einer jeweiligen Verschieberichtung des ersten Verriegelungselementes und des Löseelementes ausgerichtet. Bei einer Bewegung des Löseelementes kann das Verriegelungselement verschoben werden, wobei die Kraft über die Aufgleitelemente übertragen wird.

Die Aufgleitelemente sind oder umfassen beispielsweise Aufgleitflächen.

Das Löseelement kann für eine benutzerfreundliche Betätigung beispielsweise einen Druckknopf umfassen, durch dessen Druck das erste Verriegelungselement von der Verriegelungsstellung in die Entriegelungsstellung überführt wird. Bei einer bevorzugten Ausführungsform ist der Druckknopf beispielsweise von oben zu betätigen und in Richtung der Bodenfläche zu drücken.

Bei einer konstruktiv einfachen Ausgestaltung ist das Löseelement stiftförmig.

Das Löseelement ist bevorzugt ausgestaltet, eine Lösestellung einzunehmen, in der das erste Verriegelungselement die Entriegelungsstellung einnimmt, und eine Neutralstellung, in der das erste Verriegelungselement die Verriegelungsstellung einnimmt. Beispielsweise wird das Löseelement in der Neutralstellung betätigt, wodurch das erste Verriegelungselement von der Verriegelungsstellung in die Entriegelungsstellung bewegt und insbesondere verschoben wird. Durch die Betätigung wird das Löseelement von der Neutralstellung in die Lösestellung überführt.

Vorgesehen sein kann bei einer bevorzugten Ausführungsform, dass das erste Verriegelungselement in der Neutralstellung des Löseelementes auch die Entriegelungsstellung einnehmen kann. Beispielsweise ist vorgesehen, dass das erste Verriegelungselement von der Verriegelungsstellung in die Entriegelungsstellung bewegbar und insbesondere verschiebbar ist, während das Löseelement in der Neutralstellung verbleibt.

Das Löseelement wird beispielsweise zum Überführen von der Neutralstellung in die Lösestellung nach unten in Richtung der Bodenfläche bewegt und umgekehrt zum Überführen von der Lösestellung in die Neutralstellung nach oben.

Am zweiten Vorsprungbereich ist bei einer bevorzugten Ausführungsform ein Kontaktelement für das die Lösestellung einnehmende Löseelement angeordnet oder gebildet, wobei das Kontaktelement das Löseelement beim Verbinden der Verbindungsteile mechanisch kontaktiert und in Richtung der Neutralstellung überführt. Nimmt beispielsweise das Löseelement die Lösestellung ein, kann dadurch das erste Verriegelungselement in der Entriegelungsstellung gehalten sein. Beim Verbinden der Verbindungsteile miteinander kann das Kontaktelement das Löseelement beaufschlagen und in Richtung der Neutralstellung überführen. Das Verriegelungselement kann zum Beispiel, insbesondere unter der Wirkung des Vorspannelementes wie vorstehend erläutert, in die Verriegelungsstellung überführt werden. Auf diese Weise kann vorzugsweise eine selbsttätige Verriegelung erzielt werden.

Das Kontaktelement ist zum Beispiel ein seitlich vom zweiten Vorsprungbereich abstehender Vorsprung.

Beispielsweise durchgreift das Löseelement den ersten Vorsprungbereich in der Lösestellung und greift in eine am ersten Vorsprungbereich gebildete Ausnehmung ein, wobei die Ausnehmung das Kontaktelement beim Verbinden der Verbindungsteile aufnimmt.

Vorgesehen ist, dass am ersten Vorsprungbereich und/oder am zweiten Vorsprungbereich eine Durchgangsöffnung zum Hindurchführen eines Reinigungswerkzeugs gebildet ist. Beispielsweise ist die Durchgangsöffnung vorgesehen, um einen Stiel eines handgeführten Reinigungswerkzeugs aufzunehmen. Das Reinigungswerkzeug ist zum Beispiel ein Flachwischer, ein Wischmop oder ein Besen. Die Durchgangsöffnung kann zum Beispiel einen runden Querschnitt aufweisen.

Wie vorstehend beschrieben umfasst das erste Verbindungsteil einen ersten Vorsprungbereich und das zweite Verbindungsteil den zweiten Vorsprungbereich.

Bei einer bevorzugten Ausführungsform der erfindungsgemäßen Verbindungeinrichtung ist es günstig, wenn das erste Verbindungsteil jeweils zwei Vorsprungbereiche umfasst, wobei am ersten Verbindungsteil der erste Vorsprungbereich und das erste Verriegelungselement und am zweiten Verbindungsteil der zweite Vorsprungbereich und das zweite Verriegelungselement angeordnet sind, und wobei am ersten Verbindungsteil ein dritter Vorsprungbereich und ein drittes Verriegelungselement und am zweiten Verbindungsteil ein vierter Vorsprungbereich und ein viertes Verriegelungselement angeordnet sind. Durch die zusätzlichen Verriegelungselemente (drittes und viertes Verriegelungselement) kann eine zuverlässigere Verbindung der Verbindungsteile miteinander erfolgen. Hierbei ist insbesondere vorgesehen, dass das dritte und das vierte Verriegelungselement entsprechend wie das erste und das zweite Verriegelungselement miteinander in einer Verriegelungsstellung in Eingriff und in einer Entriegelungsstellung außer Eingriff stehen können.

Der dritte Vorsprungbereich ist bevorzugt seitlich neben dem vierten Vorsprungbereich angeordnet, bezogen auf eine Richtung quer und insbesondere senkrecht zur Verbindungsrichtung (Querrichtung).

Quer und insbesondere senkrecht zur Verbindungsrichtung (in der Querrichtung) sind der zweite Vorsprungbereich und der dritte Vorsprungbereich beispielsweise zwischen dem ersten Vorsprungbereich und dem vierten Vorsprungbereich angeordnet.

Zwei oder mehr Vorsprungbereiche sind vorzugsweise innerhalb einer gemeinsamen Ebene angeordnet. Die Ebene ist günstigerweise parallel zu einer von den Rollen des Reinigungswagens definieren Kontaktebene ausgerichtet.

Besonders vorteilhaft ist es, wenn der vierte Vorsprungbereich identisch zum ersten Vorsprungbereich ausgestaltet ist und/oder wenn der dritte Vorsprungbereich identisch zum zweiten Vorsprungbereich ausgestaltet ist.

In entsprechender Weise ist es besonders vorteilhaft, wenn das vierte Verriegelungselement identisch zum ersten Verriegelungselement ausgestaltet ist und/oder wenn das dritte Verriegelungselement identisch zum zweiten Verriegelungselement ausgestaltet ist.

Günstigerweise sind die Basisbereiche der Verbindungsteile identisch ausgestaltet.

Besonders bevorzugt ist es, wenn das erste Verbindungsteil und das zweite Verbindungsteil als Gleichteile ausgestaltet sind. Dadurch kann eine konstruktiv einfache Ausgestaltung der Verbindungseinrichtung sichergestellt werden. Die Herstellung wird erheblich vereinfacht, weil Werkzeuge und Kosten eingespart werden können. Die Bedienung der Verbindungseinrichtung für den Benutzer ist durch die Verwendung von Gleichteilen erheblich vereinfacht. Die Vielseitigkeit des Reinigungssystems ist erhöht. Beispielsweise kann jeder Reinigungswagen mit nur einem Verbindungsteil ausgeliefert werden. Durch die Verwendung als Gleichteile ist sichergestellt, dass stets zwei Reinigungswagen miteinander verbunden werden können.

Die obigen Ausführungen in Bezug auf den ersten und den zweiten Vorsprungbereich und das erste und das zweite Verriegelungselement können auf den vierten und den dritten Vorsprungbereich bzw. das vierte und das dritte Verriegelungselement übertragen werden.

Günstigerweise definieren das erste und das zweite Verriegelungselement einerseits und das vierte und dritte Verriegelungselement andererseits eine gemeinsame Achse aller Verriegelungselemente, um die die Verbindungsteile relativ zueinander schwenkbar sein können.

Vorgesehen sein kann insbesondere, dass ein weiteres Löseelement vorhanden ist, das dem vierten Verriegelungselement zugeordnet ist, um dieses von der Verriegelungsstellung in die Entriegelungsstellung zu überführen.

Obige Ausführungen in Bezug auf die weiteren Komponenten der Verbindungsteile gelten vorzugsweise für beide Verbindungsteile gleichermaßen. Beispielsweise sind an jedem der Verbindungsteile die vorstehend erwähnten Lagerelemente und/oder mindestens ein Stützelement vorgesehen.

Im verbundenen Zustand sind die Verbindungsteile insbesondere achsensymmetrisch bezüglich einer quer und insbesondere senkrecht zur Verbindungsrichtung ausgerichteten Achse ausgestaltet.

Vorgesehen sein kann, dass zwischen einem Vorsprungbereich des ersten Verbindungsteils, beispielsweise dem dritten Vorsprungbereich, und einem Vorsprungbereich des zweiten Verbindungsteils, beispielsweise dem zweiten Vorsprungbereich, ein zumindest teilweise von den Basisbereichen und den beiden genannten Vorsprungbereichen eingefasster Durchgangsbereich gebildet ist. Im Durchgangsbereich können beispielsweise Reinigungsutensilien wie manuell geführte Reinigungswerkzeuge angeordnet sein.

An zumindest einem der Verbindungsteile ist bevorzugt ein Aufnahmeelement zum Anbringen einer Klemmhalterung für Reinigungsutensilien angeordnet. Hierbei kommt zum Beispiel eine Klemmhalterung mit einem im Wesentlichen C-förmigen Halteteil zum Einsatz, an dem ein elastisch verformbares Klemmteil angeordnet ist. Das Reinigungsutensil kann unter Verformung des Klemmteils von diesem umgriffen und klemmend gehalten werden. Unter Aufweitung des Klemmteils kann das Reinigungsutensil der Klemmhalterung entnommen werden.

Die Klemmhalterung kann zum Beispiel mittels einer Steck-Dreh-Verbindung am Aufnahmeelement festlegbar sein.

Die Klemmhalterung kann Bestandteil der Verbindungseinrichtung und/oder Bestandteil des Reinigungssystems sein.

Wie eingangs erwähnt, betrifft die vorliegende Erfindung auch ein Reinigungssystem.

Ein erfindungsgemäßes, die vorstehend genannte Aufgabe lösendes Reinigungssystem umfasst einen ersten Reinigungswagen und einen zweiten Reinigungswagen, die jeweils zur Aufnahme von Reinigungsutensilien ausgestaltet sind und Rollen zum Verfahren auf einer Bodenfläche umfassen, wobei bevorzugt zumindest ein Reinigungswagen mittels einer Griffeinrichtung handgeführt ist, wobei das Reinigungssystem eine Verbindungseinrichtung der vorstehend beschriebenen Art umfasst, wobei das erste Verbindungteil am ersten Reinigungswagen festgelegt oder festlegbar ist und wobei das zweite Verbindungteil am zweiten Reinigungswagen festgelegt oder festlegbar ist.

Die Vorteile, die bereits im Zusammenhang mit der Erläuterung der erfindungsgemäßen Verbindungseinrichtung erwähnt wurden, können bei dem erfindungsgemäßen Reinigungssystem ebenfalls erzielt werden. Diesbezüglich wird auf die voranstehenden Ausführungen verwiesen.

Vorteilhafte Ausführungsformen des erfindungsgemäßen Reinigungssystems ergeben sich durch vorteilhafte Ausführungsformen der erfindungsgemäßen Verbindungseinrichtung. Diesbezüglich wird auf die voranstehenden Ausführungen verwiesen.

Das Reinigungssystem kann mehr als zwei Reinigungswagen umfassen.

Das jeweilige Verbindungsteil ist insbesondere über den Basisbereich am Reinigungswagen festgelegt oder festlegbar. Der Vorsprungbereich ragt vom Basisbereich in Richtung des jeweils anderen Reinigungswagens.

An zumindest einem Reinigungswagen ist bevorzugt mindestens ein Aufnahmeteil angeordnet oder gebildet, an dem Kopplungselemente angeordnet sind, die mit korrespondierend dazu ausgestalteten Kopplungselementen zumindest eines Verbindungsteils zusammenwirken, zum lösbaren Verbinden des Verbindungsteils mit dem Reinigungswagen. Die Möglichkeit, das Verbindungsteil lösbar am Reinigungswagen festzulegen, ist vorteilhaft. Wenn es nicht erforderlich ist, den Reinigungswagen mit einem weiteren Reinigungswagen zu verbinden, kann das Verbindungsteil entfernt werden. Beispielsweise kann anstelle des Verbindungsteils eine andersartige Funktionseinrichtung am Reinigungswagen angebracht werden. Denkbar ist zum Beispiel eine Funktionseinrichtung zur Aufnahme von Reinigungsutensilien. Über die korrespondierenden Kopplungselemente kann die lösbare Verbindung sichergestellt werden.

Das Verbindungsteil ist bevorzugt manuell und/oder werkzeuglos mit dem Reinigungswagen verbindbar.

Die Kopplungselemente können zum Beispiel durch Kraft- und/oder Formschluss zusammenwirken.

Vorgesehen sein kann, dass die Kopplungselemente Rastelemente und/oder Klemmelemente umfassen oder ausbilden.

Von Vorteil ist es, wenn an dem Reinigungswagen zwei oder mehr Aufnahmeteile an unterschiedlichen Positionen angeordnet oder gebildet sind und wenn das Verbindungsteil wahlweise mit einem der Aufnahmeteile verbindbar ist. Auf diese Weise weist das Reinigungssystem eine hohe Vielseitigkeit auf. Je nach Bedarf kann der Benutzer das Verbindungsteil an der für ihn am besten geeigneten Position am Reinigungswagen anbringen.

Wenn der Reinigungswagen zwei oder mehr Aufnahmeteile umfasst, besteht vorteilhafterweise die Möglichkeit, diesen Reinigungswagen mit zwei oder mehr weiteren Reinigungswagen zu verbinden. Dies kann nicht nur während des Arbeitseinsatzes mit den Reinigungswagen vorteilhaft sein, sondern auch bei vorbereitenden Arbeitsschritten oder bei Nachbereitung nach Abschluss der Reinigung.

Die zwei oder mehr Aufnahmeteile sind vorzugsweise identisch ausgestaltet.

Beispielsweise umfasst der Reinigungswagen einen Rahmen mit einem Rahmenunterteil, an dem die Rollen gehalten sind, und mit mindestens einem oberhalb des Rahmenunterteils angeordneten und im Abstand zum Rahmenunterteil angeordneten Rahmenoberteil. Vorgesehen sein kann, dass mindestens ein Aufnahmeteil am Rahmenoberteil angeordnet oder gebildet ist und/oder dass mindestens ein Aufnahmeteil am Rahmenunterteil angeordnet oder gebildet ist. Dies gibt die Möglichkeit, das Verbindungsteil wahlweise unten oder oben am Rahmen anzubringen.

Eine Anordnung von Verbindungsteilen oben am Rahmen weist beispielsweise den Vorteil auf, dass einem Benutzer das Verbinden der Reinigungswagen miteinander erleichtert ist, weil der Benutzer eine gute Sicht auf die Verbindungsteile hat. In entsprechender Weise können die Verbindungsteile, wenn ein Löseelement vorgesehen ist, handhabungsfreundlich voneinander getrennt werden.

Ist beispielsweise eine Durchgangsöffnung für ein Reinigungswerkzeug, ein Durchgangsbereich für ein Reinigungswerkzeug und/oder eine Klemmhalterung für Reinigungsutensilien vorgesehen, erleichtert dies dem Benutzer das Mitführen von Reinigungswerkzeug oder Reinigungsutensilien, wenn das Verbindungsteil oben am Rahmen angeordnet ist.

Positions- und Orientierungsangaben wie beispielsweise "unten" oder "oben" oder dergleichen beziehen sich auf den bereits erwähnten bestimmungsgemäßen Gebrauch des Reinigungssystems, bei dem der Reinigungswagen über die unten angeordneten Rollen auf der Bodenfläche aufsteht.

Vorgesehen sein kann, dass am Rahmenoberteil und/oder am Rahmenunterteil zwei oder mehr Aufnahmeteile angeordnet sind und dass am Rahmenoberteil und/oder am Rahmenunterteil zwei Aufnahmeteile an voneinander abgewandten Seiten des Rahmens angeordnet sind und/oder an zwei im Winkel aneinandergrenzenden Seiten des Rahmens angeordnet sind. Dies erhöht die Vielseitigkeit des Reinigungssystems. Die beiden Seiten des Reinigungswagens sind beispielsweise rechtwinklig zueinander ausgerichtet.

An jedem Reinigungswagen ist bevorzugt zumindest ein Aufnahmeteil angeordnet oder gebildet. Insbesondere kann an jedem Reinigungswagen vorzugsweise eines der Verbindungsteile lösbar festlegbar sein.

Die Aufnahmeteile unterschiedlicher Reinigungswagen sind bevorzugt identisch ausgestaltet. Dadurch besteht zum Beispiel die Möglichkeit, dass jedes Verbindungsteil an jedem Reinigungswagen festlegbar sein kann.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Reinigungssystems, umfassend zwei verbundene Reinigungswagen und eine erfindungsgemäße Verbindungseinrichtung;
- Figur 2:: eine Draufsicht auf das Reinigungssystem aus Figur 1;
- Figur 3:: eine Seitenansicht des Reinigungssystems aus Figur 1, wobei die Reinigungswagen relativ zueinander verschwenkt sind;
- Figur 4:: eine perspektivische Teildarstellung eines Reinigungswagens des Reinigungssystems aus Figur 1 und eines Verbindungsteils der Verbindungseinrichtung;
- Figur 5:: eine Draufsicht entsprechend der Detaildarstellung gemäß Figur 4, wobei zusätzlich ein weiteres Verbindungsteil der Verbindungseinrichtung teilweise gezeigt ist und der andere Reinigungswagen der Übersichtlichkeit halber nur konturiert gezeigt ist;
- Figuren 6 und 7:: Darstellungen entsprechend Figur 5, wobei die Verbindungsteile in einander genäherten Stellungen gezeigt sind;
- Figuren 8 und 9:: Darstellungen entsprechend Figur 6 oder Figur 7, wobei die Reinigungswagen schief aneinander angenähert werden;
- Figur 10:: eine Schnittansicht der Verbindungseinrichtung in einem verbundenen Zustand der Reinigungswagen, wobei der Schnitt entlang der Linie 10-10 in Figur 11 verläuft;
- Figur 11:: eine Schnittdarstellung eines Verbindungsteils entlang der Linie 11-11 in Figur 5;
- Figur 12:: eine vergrößerte Darstellung von Detail A in Figur 11;
- Figur 13:: eine Darstellung entsprechend Figur 12, wobei ein Verriegelungselement und ein Löseelement des Verbindungsteils im Vergleich zur Figur 12 unterschiedliche Positionen einnehmen;
- Figur 14:: eine Darstellung ähnlich Figur 4, wobei das Verbindungsteil getrennt vom Reinigungswagen gezeigt ist;
- Figur 15:: eine perspektivische Darstellung von Detail B in Figur 14 in unterschiedlicher Perspektive;
- Figur 16:: eine perspektivische Darstellung einer Klemmhalterung des Reinigungssystems;
- Figur 17:: zwei Reinigungswagen des Reinigungssystems und eine Verbindungseinrichtung, über die die Reinigungswagen miteinander verbunden sind, in einer perspektivischen Darstellung;
- Figur 18:: die zwei Reinigungswagen des Reinigungssystems aus Figur 1 in einer schematischen Seitenansicht, die an einem jeweiligen Rahmenunterteil miteinander über die Verbindungseinrichtung verbunden sind; und
- Figur 19:: die zwei Reinigungswagen in einer schematischen Ansicht von oben, wobei diese über Eck miteinander über die Verbindungseinrichtung verbunden sind.

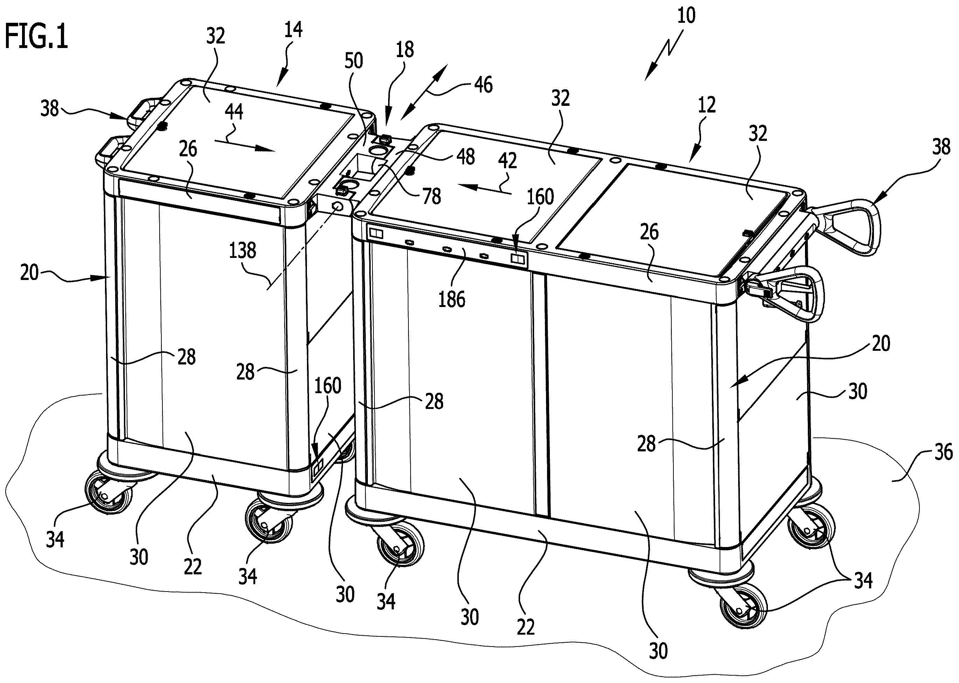

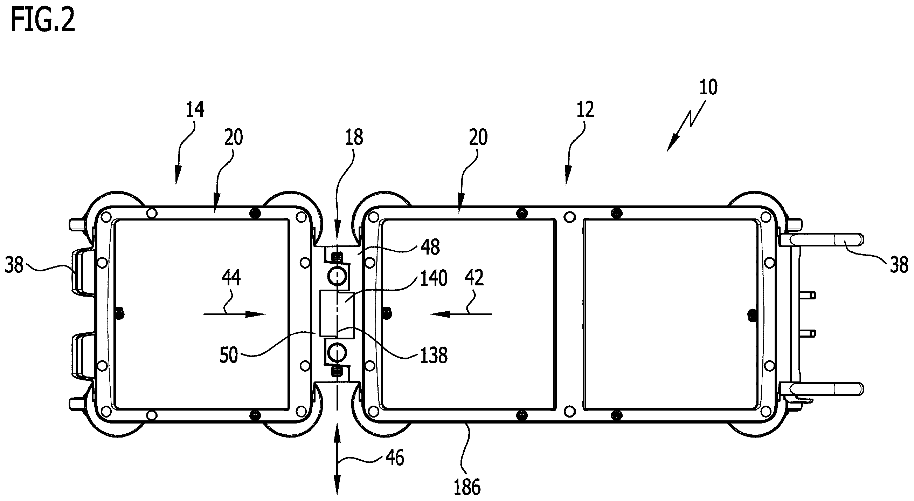

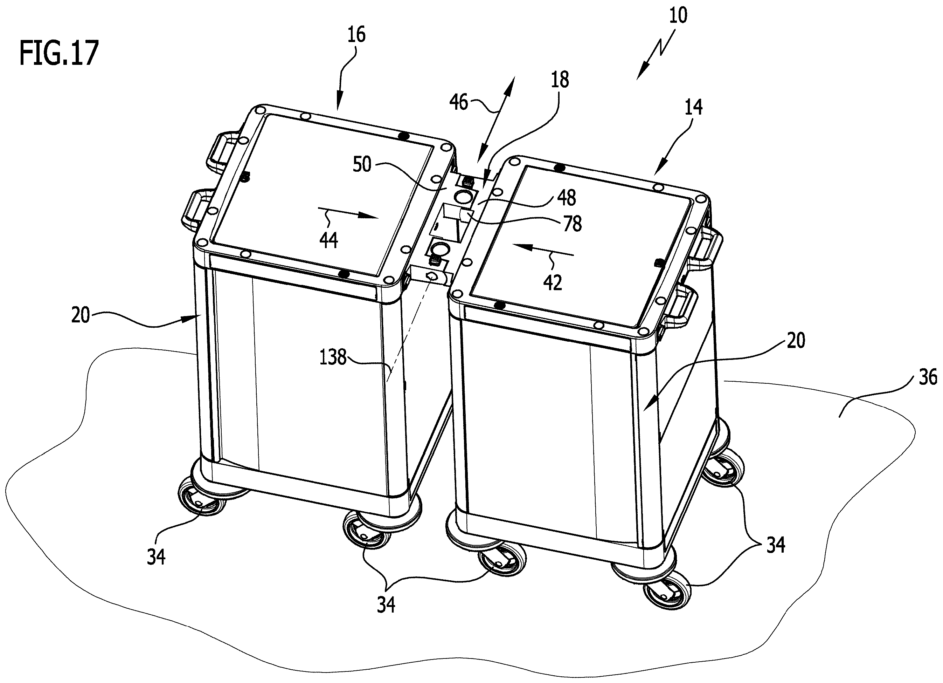

Die Figuren 1 bis 3 zeigen eine Teildarstellung eines insgesamt mit dem Bezugszeichen 10 belegten Reinigungssystems in bevorzugter Ausführungsform. Das Reinigungssystem 10 umfasst einen Reinigungswagen 12 und einen Reinigungswagen 14. Darüber hinaus kann das Reinigungssystem 10 weitere Reinigungswagen umfassen. Figur 17 zeigt hiervon beispielhaft einen Reinigungswagen 16, der vorliegend identisch zum Reinigungswagen 14 ausgestaltet ist. Es versteht sich, dass die Reinigungswagen unterschiedlich ausgeführt sein können.

Weiter umfasst das Reinigungssystem 10 eine bevorzugte Ausführungsform der erfindungsgemäßen Verbindungseinrichtung 18 zum Verbinden von zwei Reinigungswagen. Hierbei ist insbesondere eine lösbare Verbindung der Reinigungswagen möglich.

Wie insbesondere aus den Figuren 1 bis 3 und 17 hervorgeht, umfassen die Reinigungswagen 12 bis 16 insbesondere einen Rahmen 20, wobei hierunter insbesondere ein auch Korpus oder ein Gestell verstanden werden kann. Der Rahmen 20 umfasst ein Rahmenunterteil 22 und einem relativ zu diesem in einer Höhenrichtung 24 beabstandetes Rahmenoberteil 26. Das Rahmenunterteil 22 und das Rahmenoberteil 26 sind mittels Profilteilen 28 miteinander verbunden. Der Rahmen 20 kann Seitenwände und/oder Türen 30 aufweisen, so dass sich ein insgesamt im Wesentlichen geschlossener Korpus ergibt. Obenseitig kann der Rahmen 20 eine Deckenwand 32 umfassen.

Am Rahmenunterteil 22 sind Rollen 34 an jedem Reinigungswagen 12 bis 16 angeordnet. Über die Rollen 34, bei denen es sich um starre Rollen oder um Lenkrollen handeln kann, kann der Reinigungswagen auf einer Bodenfläche 36 verfahren werden. Die Reinigungswagen 12 bis 16 sind von einem in der Zeichnung nicht dargestellten Benutzer handgeführt. Zur Führung umfassen die Reinigungswagen 12 bis 16 bevorzugt jeweils eine am Rahmen 20 festgelegte Griffeinrichtung 38, von denen unterschiedliche Ausgestaltungen vorgesehen sein können.

Die Reinigungswagen 12 bis 16 dienen zur Aufnahme von in der Zeichnung nicht dargestellten Reinigungsutensilien, zum Beispiel handgeführten Reinigungsmaschinen, Reinigungswerkzeugen, Behältern für Reinigungszubehör, Abfall, Reinigungstüchern etc.

Positions- und Orientierungsangaben sind vorliegend auf einen bestimmungsgemäßen Gebrauch des Reinigungssystems 10 und der Verbindungseinrichtung 18 bezogen aufzufassen. Hierbei steht der jeweilige Reinigungswagen 12 bis 16 über die Rollen 34 auf der Bodenfläche 36. Nicht-limitierend kann vereinfacht angenommen werden, dass die Bodenfläche 36 horizontal ausgerichtet ist. Im bestimmungsgemäßen Gebrauch fällt eine von den Rollen 34 definierte Kontaktebene mit der von der Bodenfläche 36 definierten Ebene zusammen.

Über die Verbindungseinrichtung 18 können zwei der Reinigungswagen 12 bis 16 miteinander verbunden werden. Dies wird nachfolgend am Beispiel der Reinigungswagen 12 und 14 erläutert. Die für den Reinigungswagen 12 getroffenen Feststellungen gelten in entsprechender Weise für den Reinigungswagen 16 gemäß Figur 17, so dass hierauf nicht mehr gesondert eingegangen wird.

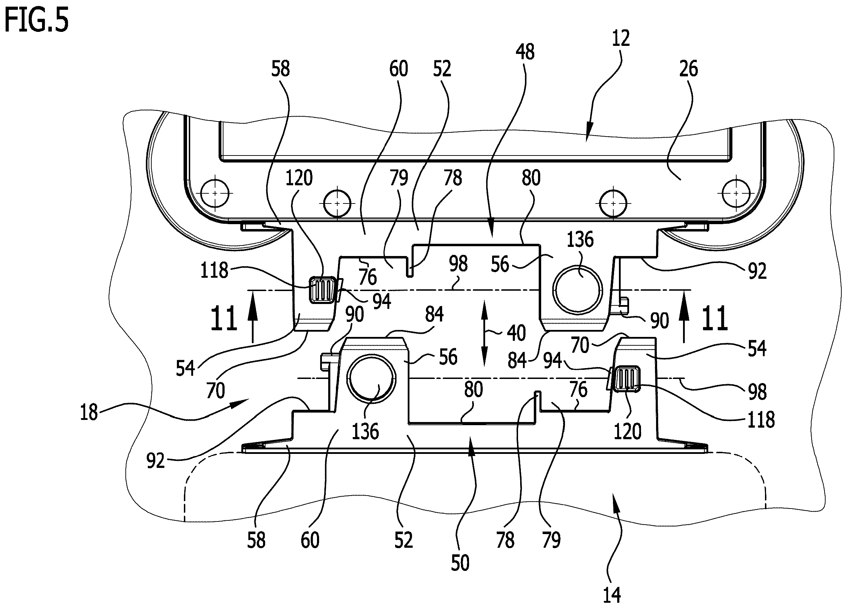

Zum Verbinden der Reinigungswagen 12 und 14 ist vorgesehen, dass diese einander angenähert und in einer gewünschten Verbindungsrichtung 40 miteinander verbunden werden. Die Verbindungsrichtung 40 ist in der Zeichnung durch einen Doppelpfeil gekennzeichnet (Figuren 5 bis 7 und 10). In den Figuren 1, 2 und 17 wird die vorgesehene Verbindungsrichtung 40 durch zwei Pfeile 42, 44 symbolisiert, wobei diese Pfeile 42, 44 die Richtung angeben, in die ein jeweiliger Reinigungswagen 12 und 16 bzw. 14 zum Verbinden mit dem jeweils anderen Reinigungswagen zu bewegen ist.

Die Verbindungsrichtung 40 ist vorliegend parallel zur Kontaktebene der Rollen 34 ausgerichtet und quer und insbesondere senkrecht zur Höhenrichtung 24.

Quer und insbesondere senkrecht zur Verbindungsrichtung 40 ist eine durch einen Doppelpfeil gekennzeichnete Querrichtung 46 ausgerichtet, die ihrerseits quer und insbesondere senkrecht zur Höhenrichtung 24 ausgerichtet ist. Dementsprechend sind die Höhenrichtung 24, die Verbindungsrichtung 40 und die Querrichtung 46 bevorzugt paarweise senkrecht zueinander ausgerichtet.

Die Verbindungseinrichtung 18 umfasst ein erstes Verbindungsteil 48 und ein zweites Verbindungsteil 50. Die Verbindungsteile 48, 50 können lösbar miteinander verbunden werden. Jedes Verbindungsteil 48, 50 kann lösbar an einem der Reinigungswagen 12, 16 festgelegt werden. Dies wird nachfolgend erläutert.

Die Verbindungsteile 48, 50 sind bei der bevorzugten Verbindungseinrichtung 18 als Gleichteile ausgestaltet. Dies bietet den Vorteil einer vereinfachten Herstellung mit verringerten Herstellungskosten. Einem Benutzer wird die Handhabung durch Einsatz von Gleichteilen erheblich vereinfacht. Die Verbindungseinrichtung 18 erweist sich als kompatibel mit Reinigungswagen unterschiedlicher Art, so dass das Reinigungssystem 10 eine hohe Vielseitigkeit aufweist.

Aufgrund der identischen Ausgestaltung der Verbindungsteile 48, 50 wird nachfolgend nur auf das Verbindungsteil 48 eingegangen. Die diesbezüglichen Ausführungen gelten entsprechend für das Verbindungsteil 50. Für gleiche Komponenten werden identische Bezugszeichen benutzt. Die voranstehenden Ausführungen betreffend die Nomenklatur der zusammenwirkenden Komponenten wird anschließend erläutert.

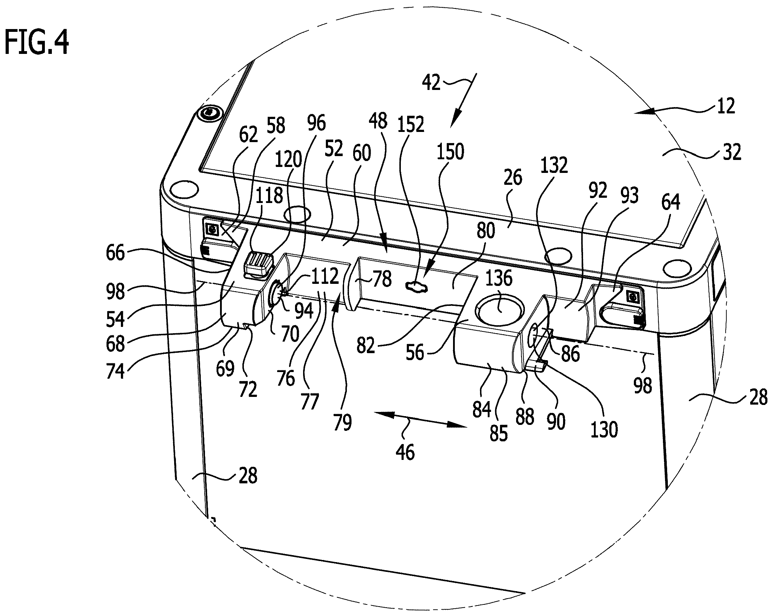

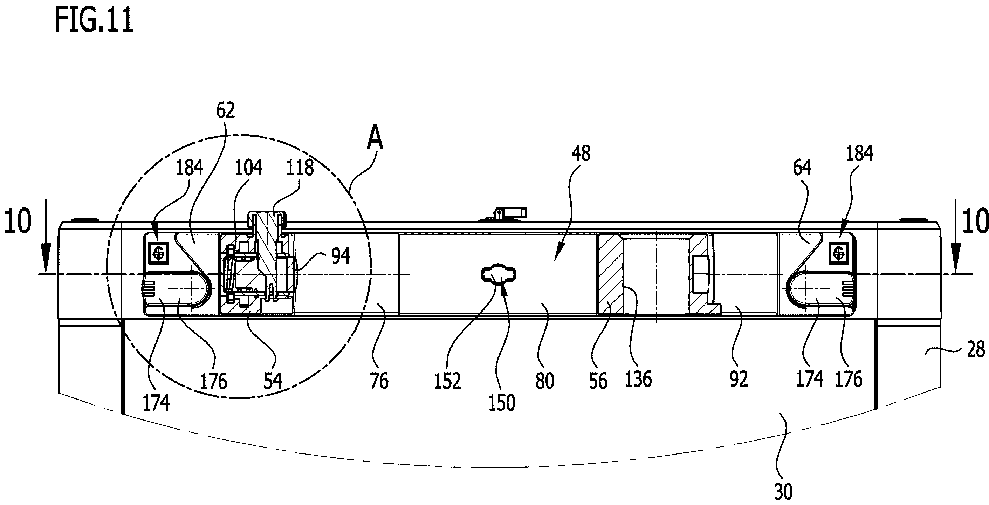

Wie insbesondere aus den Figuren 4 bis 7 sowie 10 bis 13 ersichtlich ist, umfasst das Verbindungsteil 48 einen Basisbereich 52, der dem Reinigungswagen 12 zugewandt ist, und vom Basisbereich 52 in Richtung des anderen Verbindungsteils 50 hervorspringende Vorsprungbereiche 54 und 56.

Der Basisbereich 52 umfasst einen im Wesentlichen plattenförmigen Abschnitt 58, der am Reinigungswagen 12 anliegt, und einen sich von diesem erhebenden Sockelabschnitt 60. Die Vorsprungbereiche 54, 56 stehen dabei vom Sockelabschnitt 60 ab. Die Vorsprungbereiche 54 und 56 sind in der Querrichtung 46 voneinander beabstandet.

Das Verbindungsteil 48 weist bezogen auf die Querrichtung 46 einen ersten Endabschnitt 62 und diesem gegenüberliegend einen zweiten Endabschnitt 64 auf. Zwischen den Endabschnitten 62, 64 erstreckt sich der Sockelabschnitt 60.

Der Vorsprungbereich 54 ist im vorliegenden Beispiel nahe dem Endabschnitt 62 angeordnet. Eine erste dem Endabschnitt 62 zugewandte Seitenfläche 66 ist im Wesentlichen senkrecht zu einer Ebene des plattenförmigen Abschnittes 58 ausgerichtet.

Stirnseitig weist der Vorsprungbereich 54 ein Anlageelement 68 auf. Das Anlageelement 68 umfasst einen Radius und ist infolgedessen konvex mit einer im Wesentlichen zylinderförmigen Rundung ausgestaltet.

In der Querrichtung 46 folgend weist der Vorsprungbereich 54 ein Anlageelement 70 auf. Eine Ebene des Anlageelementes 70 ist geneigt in Bezug auf die vorgesehene Verbindungsrichtung 40. Der Vorsprungbereich 54 weist im Bereich des Anlageelementes 70 ausgehend vom Basisbereich 52 dadurch eine Verjüngung in Richtung des Verbindungsteils 50 auf (Figuren 4 und 5).

Untenseitig am Vorsprungbereich 54 ist eine Ausnehmung 72 angeordnet. Die Ausnehmung 72 ist zwischen einer unteren Wand 74 und dem Anlageelement 70 positioniert.

An das Anlageelement 70 schließt sich in der Querrichtung 46 am Basisbereich 52 ein Anlageelement 76 an (Figur 4). Das Anlageelement 76 weist einen Radius auf. Im vorliegenden Beispiel ist das Anlageelement 76 konkav mit einer im Wesentlichen zylinderförmigen Rundung ausgestaltet

Weiter in der Querrichtung 46, in Richtung auf den Vorsprungbereich 56, schließt sich an das Anlageelement 76 ein Stützelement 78 an. Das Stützelement 78 ist ein Vorsprung am Verbindungsteil 48, der vom Basisbereich 52 in Richtung des anderen Verbindungsteils 50 vorspringt. Die Erstreckung des Stützelementes 78 in Richtung des Verbindungsteils 50 ist im vorliegenden Beispiel geringer als die Erstreckung des Vorsprungbereiches 54, zum Beispiel ungefähr ein Viertel bis drei Viertel der Erstreckung des Vorsprungbereiches 54.

Das Stützelement 78 ist im vorliegenden Beispiel scheibenförmig und weist dem Basisbereich 52 abgewandt eine Rundung auf. Das Stützelement 78 könnte jedoch auch eine andersartige Form aufweisen.

Zwischen dem Stützelement 78 und dem Vorsprungbereich 54 ist ein Zwischenraum 79 gebildet.

Weiter in der Querrichtung, in Richtung auf den Vorsprungbereich 56, folgt auf das Stützelement 78 eine im Wesentlichen planare Stirnfläche 80 des Sockelabschnittes 60.

In Richtung des Endabschnittes 64 grenzt der Vorsprungbereich 56 an die Stirnfläche 80 und weist in der Querrichtung 46 zunächst eine Seitenfläche 82 auf. Die Seitenfläche 82 ist im Wesentlichen senkrecht zur Ebene des plattenförmigen Abschnittes 58 ausgerichtet.

In der Querrichtung 46 angrenzend weist der Vorsprungbereich 56 stirnseitig ein Anlageelement 84 auf. Das Anlageelement 84 umfasst einen Radius. Im vorliegenden Beispiel ist das Anlageelement 84 konvex mit einer im Wesentlichen zylinderförmigen Rundung ausgestaltet

In der Querrichtung 46 schließt sich an das Anlageelement 84 ein Anlageelement 86 am Vorsprungbereich 56 an. Die Ebene des Anlageelementes 86 ist relativ zur vorgesehenen Verbindungsrichtung 40 geneigt ausgebildet. Der Vorsprungbereich 56 weist dadurch im Bereich des Anlageelementes 56 ausgehend vom Basisbereich 52 in Richtung des anderen Verbindungsteils 50 eine Verjüngung auf (Figuren 4 und 5).

Insbesondere stimmen die Neigungen der Anlageelemente 70 und 86 an den Vorsprungbereichen 54 bzw. 56 überein. Der Grad der Verjüngung der Vorsprungbereiche 54, 56 stimmt dementsprechend überein.

Ausgehend von einer unteren Wand 88 des Vorsprungbereiches 56 steht ein Kontaktelement 90 am Vorsprungbereich 56 in der Querrichtung 46 in Richtung des Endabschnittes 64 ab. Das Kontaktelement 90 ist näherungsweise ein leistenartiger Vorsprung, dessen Form an die Form der Ausnehmung 72 des Vorsprungbereiches 54 angepasst ist.

In der Querrichtung 46 folgend schließt sich an den Vorsprungbereich 56 ein Anlageelement 92 am Basisbereich 52 an. Das Anlageelement 92 weist einen Radius auf. Im vorliegenden Fall ist das Anlageelement 92 konvex mit einer im Wesentlichen zylinderförmigen Rundung ausgestaltet.

Die Anlageelemente 68 und 92 am Vorsprungbereich 54 bzw. am Basisbereich 52 sind in Größe und Form und insbesondere Krümmung aneinander angepasst. Sie bilden korrespondierende Lagerelemente 69 bzw. 93, wenn die Verbindungsteile 48, 50 miteinander verbunden sind.

Die Anlageelemente 76 und 84 am Basisbereich 52 bzw. Vorsprungbereich 56 sind in Größe und Form und insbesondere Krümmung aneinander angepasst. Sie bilden korrespondierende Lagerelemente 77 bzw. 85, wenn die Verbindungsteile 48, 50 miteinander verbunden sind.

Insbesondere bilden die Anlageelemente 76 und 92, die konkav ausgestaltet sind, Lagerschalen. Die Anlageelemente 68 und 84, die konvex ausgestaltet sind, sind Lagervorsprünge.

Die Anlageelemente 70 und 86 am Vorsprungbereich 54 bzw. am Vorsprungbereich 56 sind in Größe und Form aneinander angepasst, zusätzlich zur Neigung in Bezug auf die Verbindungsrichtung 40.

Um die Verbindungsteile 48, 50 miteinander zu verbinden, weisen diese jeweils Verriegelungselemente auf. Hierbei kann ein Verriegelungselement am Verbindungsteil 48 mit einem korrespondierenden Verriegelungselement am Verbindungsteil 50 zusammenwirken. Da die Verbindungsteile 48, 50 als Gleichteile ausgestaltet sind, weist jedes Verbindungsteil 48, 50 zwei Verriegelungselemente auf. Diese beiden Verriegelungselemente werden am Beispiel des ersten Verbindungsteils 48 erläutert, wie bereits vorstehend die Form des Verbindungsteils 48 beispielhaft beschrieben wurde.

Wie insbesondere aus den Figuren 4 und 10 bis 13 hervorgeht, ist am Vorsprungbereich 54 ein Verriegelungselement 94 angeordnet. Das Verriegelungselement 94 ist ausgestaltet als Verriegelungsvorsprung, insbesondere als Verriegelungsstift 96, der in Querrichtung 46 längs einer Achse 98 am Vorsprungbereich 54 verschieblich gelagert ist.

Im vorliegenden Fall ist zur Aufnahme des Verriegelungsstiftes 96 eine Hülse 100 vorgesehen, die einstückig mit dem Vorsprungbereich 54 gebildet sein kann. Ein Verdrehsicherungselement 102 am Vorsprungbereich 54 kann vorgesehen sein, um eine Rotation der Hülse 100 um die Achse 98 zu verhindern. Je nach Ausgestaltung der Hülse 100 kann das Verdrehsicherungselement 102 entbehrlich sein.

Am Vorsprungbereich 54 ist ein Vorspannelement 104 vorgesehen. Das Vorspannelement 104 ist ausgestaltet als Schraubenfeder 106, die den Verriegelungsstift 96 abschnittsweise umgibt und sich an Anschlägen 108 des Vorsprungbereiches 54 und 110 des Verriegelungsstiftes 96 abstützt.

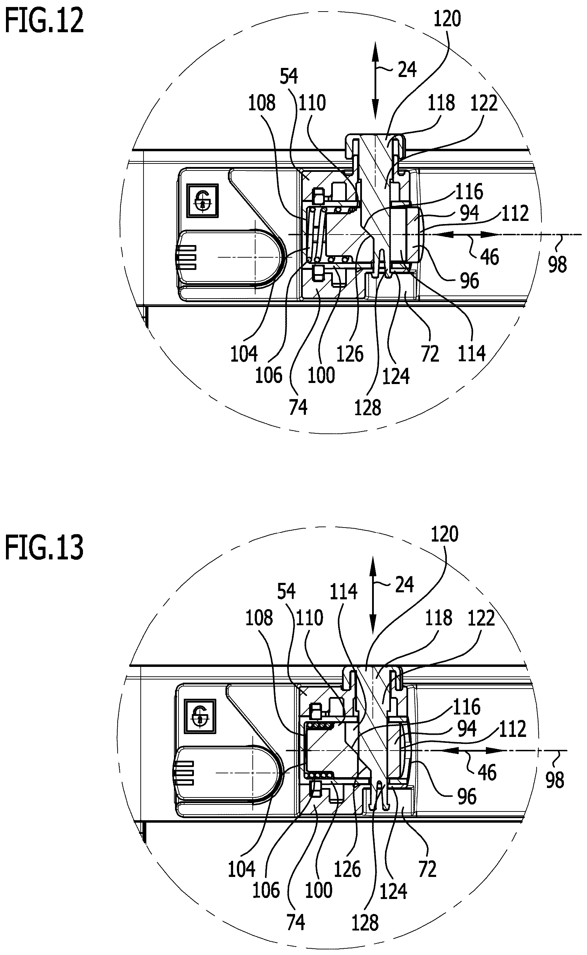

Das Vorspannelement 104 ist ausgestaltet, den Verriegelungsstift 96 in Richtung einer Verriegelungsstellung vorzuspannen. In der Verriegelungsstellung ragt der Verriegelungsstift 96 aus der Hülse 100 über das Anlageelement 70 heraus (Figur 12)

Gegen die Wirkung des Vorspannelementes 104 kann der Verriegelungsstift 96 in eine Entriegelungsstellung überführt werden, in der er in die Hülse 100 verschoben wird und nicht über das Anlageelement 70 hinausragt (Figur 13). Die Verschieberichtung erfolgt längs der Achse 98, vorliegend in der Querrichtung 46.

Der Verriegelungsstift 96 weist stirnseitig ein Aufgleitelement 112 auf. Das Aufgleitelement 112 umfasst eine Aufgleitfläche, die relativ zur vorgesehenen Verbindungsrichtung 40 eine Neigung aufweist.

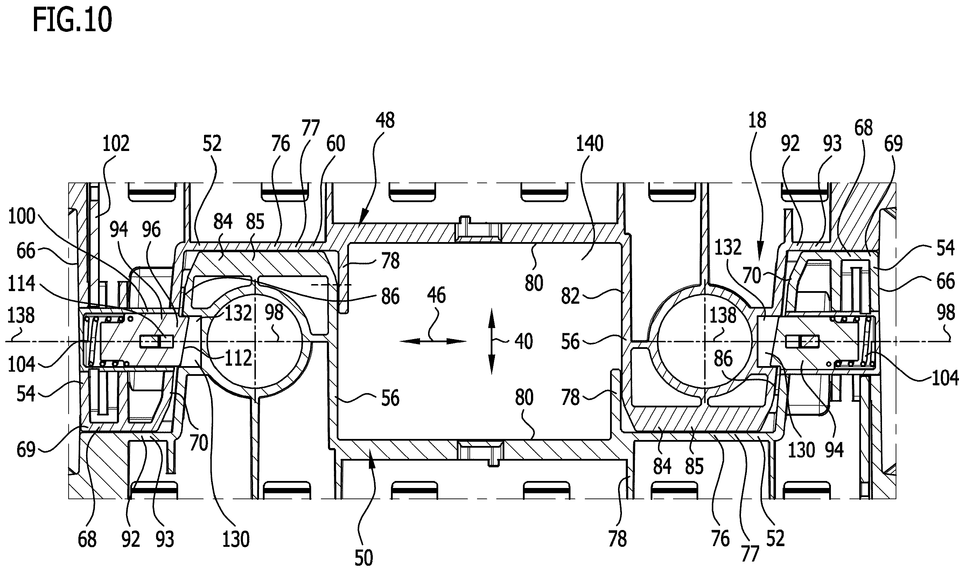

Im Verriegelungsstift 96 ist eine Durchgangsöffnung 114 gebildet. Vorliegend ist die Durchgangsöffnung 114 in der Höhenrichtung 24 erstreckt (Figuren 10 bis 13).

An einem Rand der Durchgangsöffnung 114 umfasst der Verriegelungsstift 96 ein Aufgleitelement 116, das vorliegend eine Aufgleitfläche umfasst. Das Aufgleitelement 116 ist relativ zur Höhenrichtung 24 und relativ zur Querrichtung 46 jeweils geneigt ausgestaltet, vorzugsweise um jeweils ca. 45° (Figuren 12 und 13). Am Aufgleitelement 116 verringert sich der Querschnitt der Durchgangsöffnung 114, in einer Blickrichtung von oben nach unten.

Die Verbindungseinrichtung 18 umfasst ein dem Verriegelungsstift 96 zugeordnetes Löseelement 118. Das Löseelement 118 ist stiftförmig ausgebildet und durchgreift im vorliegenden Beispiel den Vorsprungbereich 54 und den Verriegelungsstift 96 von oben nach unten.

Obenseitig umfasst das Löseelement 118 einen Druckknopf 120 als Betätigungselement. An den Druckknopf 120 schließt sich nach unten ein Abschnitt 122 an, der die Durchgangsöffnung 114 des Verriegelungsstiftes 96 und eine Öffnung 124 des Vorsprungbereiches 56 durchsetzt, wobei die Öffnung 124 in die Ausnehmung 72 mündet (Figuren 12 und 13).

Der Abschnitt 122 umfasst ein korrespondierend zum Aufgleitelement 116 ausgebildetes Aufgleitelement 126, das eine Aufgleitfläche umfasst. Die Aufgleitelemente 116, 126 können zusammenwirken. Von oben nach unten verjüngt sich der Abschnitt 122 im Bereich des Aufgleitelementes 126.

Am unteren Ende weist das Löseelement 118 ein Rastelement 128 auf, ausgestaltet als Rasthaken. Das Rastelement 128 verrastet mit einem Rand der Öffnung 124, wodurch das Löseelement 118 unverlierbar am Vorsprungbereich 56 gehalten ist.

Dies gibt auch die Möglichkeit, den Verriegelungsstift 96, durch welchen das Löseelement 118 hindurchragt, unverlierbar am Vorsprungbereich 56 zu halten.

Das Löseelement 118 ist am Vorsprungbereich 54 verschiebbar gelagert entlang der Höhenrichtung 24.

Die Durchgangsöffnung 114 des Verriegelungsstiftes 96 ist so bemessen, dass sie breiter als der Abschnitt 122 oberhalb von dessen Verjüngung ist. Hierbei kann insbesondere der Verriegelungsstift 96 quer zum Löseelement 118 verschoben werden.

Das Löseelement 118 ist ausgebildet, eine in Figur 12 dargestellte Neutralstellung einzunehmen. In der Neutralstellung ist das Löseelement 118 soweit wie möglich nach oben verschoben, und das Rastelement 128 liegt am Rand der Öffnung 124 an. Die Aufgleitelemente 116, 126 liegen aneinander an.

In der Neutralstellung kann der Verriegelungsstift 96 die Verriegelungsstellung einnehmen, indem das Vorspannelement 104 diesen soweit wie möglich verschiebt. Das Löseelement 118 bildet den Anschlag für den Verriegelungsstift 96.

In der Neutralstellung kann der Verriegelungsstift 96 entgegen der Wirkung des Vorspannelementes 104 auch in die Entriegelungsstellung verschoben werden, weil die Durchgangsöffnung 114 eine größere Querschnittsfläche aufweist als der Abschnitt 122.

Das Löseelement 114 kann von der Neutralstellung durch Verschieben nach unten, zum Beispiel durch Druckbetätigung, in eine Lösestellung überführt werden (Figur 13). Dabei gleiten die Aufgleitelemente 116, 126 aneinander, und der Verriegelungsstift 96 wird entgegen der Wirkung des Vorspannelementes 114 von der Verriegelungsstellung in die Entriegelungsstellung verschoben. In der Lösestellung ragt das Rastelement 128 über den Rand der Öffnung 124 hervor und greift in die Ausnehmung 72 ein. Das Löseelement 118 bildet einen Anschlag, der den Verriegelungsstift 96 in der Entriegelungsstellung hält.

Durch eine Kraft nach oben kann das Löseelement 118 relativ zum Vorsprungbereich 56 nach oben in Richtung der Neutralstellung verschoben werden. Infolgedessen entfällt die Anschlagwirkung für den Verriegelungsstift 96. Unter der Wirkung des Vorspannelementes 104 wird der Verriegelungsstift 96 wieder in die Verriegelungsstellung verschoben. Dabei können die Aufgleitelemente 116, 126 weiter zusammenwirken, um das Löseelement 118 nach oben bis in die Neutralstellung zu verschieben.

Wie insbesondere aus Figur 10 hervorgeht, ist am Vorsprungbereich 56 ein Verriegelungselement 130 angeordnet. Das Verriegelungselement 130 ist eine Aufnahme für den Verriegelungsvorsprung, insbesondere ausgebildet als Sackloch 132, das sich ausgehend vom Anlageelement 86 erstreckt.

Das Verriegelungselement 130 ist von den Abmessungen korrespondierend zum Verriegelungselement 94 ausgestaltet und kann mit diesem (des jeweils anderen Verbindungsteils 48, 50) in formschlüssigem Eingriff stehen. Dabei kann der die Verriegelungsstellung einnehmende Verriegelungsstift 96 formschlüssig in das Sackloch 132 eingreifen. Der Verriegelungsstift 96 und das Sackloch 132 weisen vorliegend kreisrunde Querschnitte auf.

Nimmt der Verriegelungsstift 96 demgegenüber die Entriegelungsstellung ein, ist er außerhalb des Sackloches 132 angeordnet.

Die Verriegelungsstellung des Verriegelungsstiftes 96 und dessen Entriegelungsstellung definieren eine Verriegelungsstellung bzw. eine Entriegelungsstellung zusammenwirkender Verriegelungselemente 94, 130.

Das Verriegelungselement 130 definiert eine Achse, die im Verbindungszustand der Verbindungsteile 48, 50 identisch zur Achse 98 ist. Dementsprechend sind die Verriegelungselemente 94 und 130 der beiden Verbindungsteile 48, 50 im Verbindungszustand koaxial zueinander ausgerichtet.

Insbesondere sind auch die Verriegelungselemente 94, 130 desselben Verbindungsteils 48, 50 koaxial zueinander ausgerichtet.

Am Vorsprungbereich 56 ist eine Durchgangsöffnung 136 gebildet, die sich in der Höhenrichtung 24 erstreckt. Die Durchgangsöffnung 136 weist zum Beispiel einen zylindrischen Querschnitt auf und dient zur Aufnahme von Reinigungsutensilien. Insbesondere kann zum Beispiel der Stiel eines Wischmops, eines Flachwischers oder eines Besens durch die Durchgangsöffnung 136 hindurchgeführt werden.

Nachfolgend wird unter Verweis zunächst auf die Figuren 5 bis 7 auf eine Verbindung der Reinigungswagen 12, 14 miteinander eingegangen. Dabei wird zunächst angenommen, dass die Reinigungswagen 12, 14 entlang der gewünschten Verbindungsrichtung 40 korrekt relativ zueinander ausgerichtet sind. Die Richtungen beider Pfeile 42, 44 sind in diesem Fall einander entgegengesetzt und fluchten.

Wie in Figur 5 dargestellt, nehmen die Verbindungsteile 48, 50 zunächst einen Abstand voneinander ein. In der Querrichtung 46 sind die Reinigungswagen 12, 14 relativ zueinander korrekt positioniert. Der Verriegelungsstift 96 kann beispielsweise wie dargestellt die Verriegelungsstellung einnehmen und das Löseelement 118 die Neutralstellung.

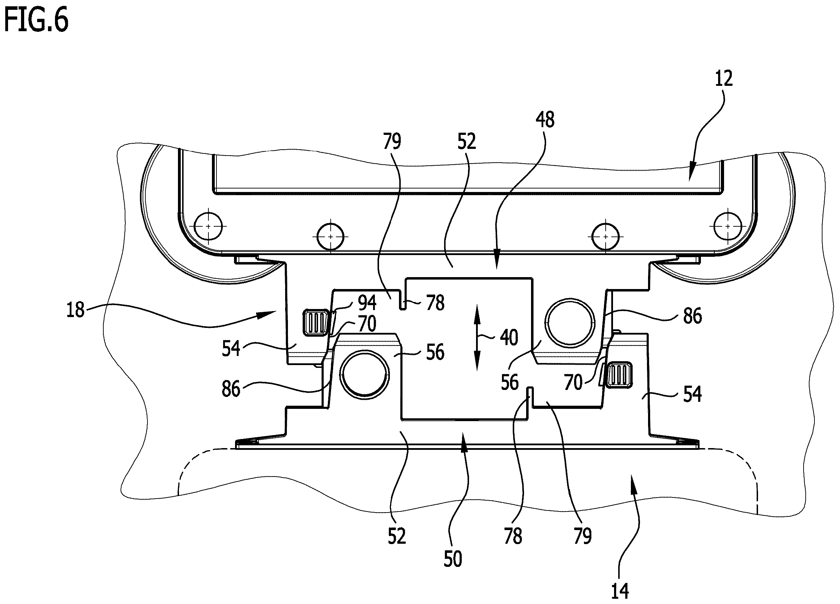

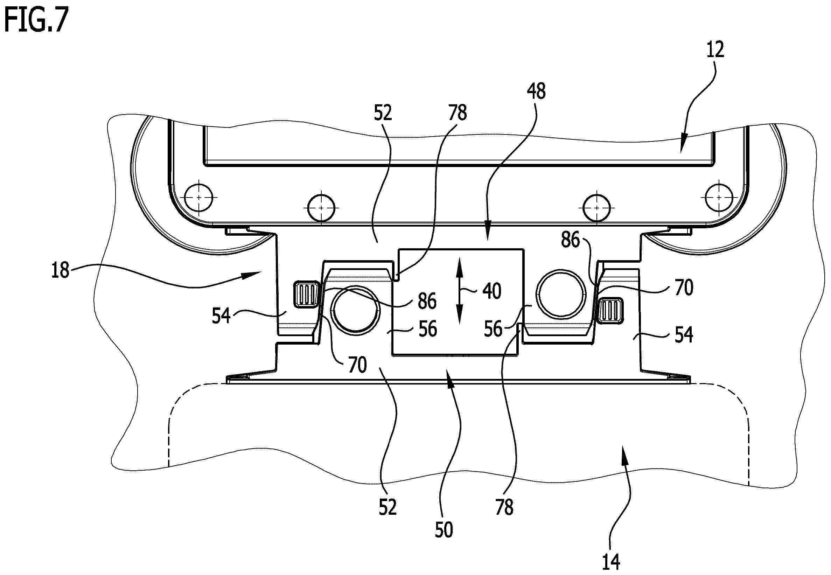

Beim Annähern der Verbindungsteile 48, 50 gelangt der Vorsprungbereich 56 eines Verbindungsteils 48, 50 seitlich neben den Vorsprungbereich 54 des jeweils anderen Verbindungsteils 48, 50 in den Zwischenraum 79 (Figur 6). Bei weiterer Bewegung kontaktiert das Anlageelement 86 das Aufgleitelement 112 (Figur 7). Dadurch wird der Verriegelungsstift 96 in die Entriegelungsstellung überführt. Die Verbindungsteile 48, 50 können weiter aneinander angenähert werden.

Eine Bewegung der Verbindungsteile 48, 50 ist solange möglich, bis die Verbindungsteile 48, 50 aneinander zur Anlage geraten. Dabei liegen die Anlageelemente 68 und 92 aneinander an, und die Anlageelemente 76 und 84 liegen aneinander an. Zugleich ist das Verriegelungselement 130 am Vorsprungbereich 56 eines Verbindungsteils 48, 50 koaxial zum und neben dem Verriegelungsstift 96 am Vorsprungbereich 54 des anderen Verbindungsteils 48, 50 ausgerichtet. Unter der Wirkung des Vorspannelementes 104 wird der Verriegelungsstift 96 in die Verriegelungsstellung überführt und ist in formschlüssigem Eingriff mit dem Sackloch 132 (Figur 10). Die beiden Verbindungsteile 48, 50 sind miteinander verbunden.

Im Verbindungszustand sind die Vorsprungbereiche 54 und 56 unmittelbar seitlich nebeneinander angeordnet. Die Anlageelemente 70 und 86 liegen aneinander an.

Im Verbindungszustand greift der Vorsprungbereich 56 in den Zwischenraum 79 ein und ist zwischen dem Vorsprungbereich 54 und dem Stützelement 78 angeordnet.

Das Stützelement 78 dient zum Abstützen des Vorsprungbereiches 56, so dass dieser sich nicht in der Querrichtung 46 vom Vorsprungbereich 54 entfernen kann. Dies stellt sicher, dass die Verriegelungselemente 94, 130 in Eingriff miteinander bleiben und sichert dadurch die Verbindung der Verbindungsteile 48, 50.

Der Vorsprungbereich 56 kann beispielsweise über die Seitenfläche 82 am Stützelement 78 anliegen.

Beim Annähern der Verbindungsteile 48, 50 kann das Stützelement 78 als Führungselement für den Vorsprungbereich 56 wirken, wodurch die Verbindung der Verbindungsteile 48, 50 erleichtert wird.

Günstig ist, dass durch die seitliche Positionierung der Verriegelungselemente 94, 130 und deren koaxiale Ausrichtung zueinander eine schwenkbare Lagerung der Verbindungsteile 48, 50 miteinander ermöglicht ist. Insbesondere bilden die Verriegelungselemente 94 und die korrespondierenden Verriegelungselemente 130 zusammenwirkende Lagerelemente.

Im Verbindungszustand definiert die Achse 98 eine Schwenkachse 138. Die Schwenkachse 138 ist parallel zur Kontaktebene der Rollen 34 ausgerichtet, insbesondere horizontal.

Die Verbindungsteile 48, 50 sind relativ zueinander um die Schwenkachse 138 schwenkbar. Insbesondere sind die Verbindungsteile 48, 50 schwenkbar aneinander gelagert. Hierbei wirken die Lagerelemente 69 und 93 bzw. die Lagerelemente 77 und 85 zusammen.

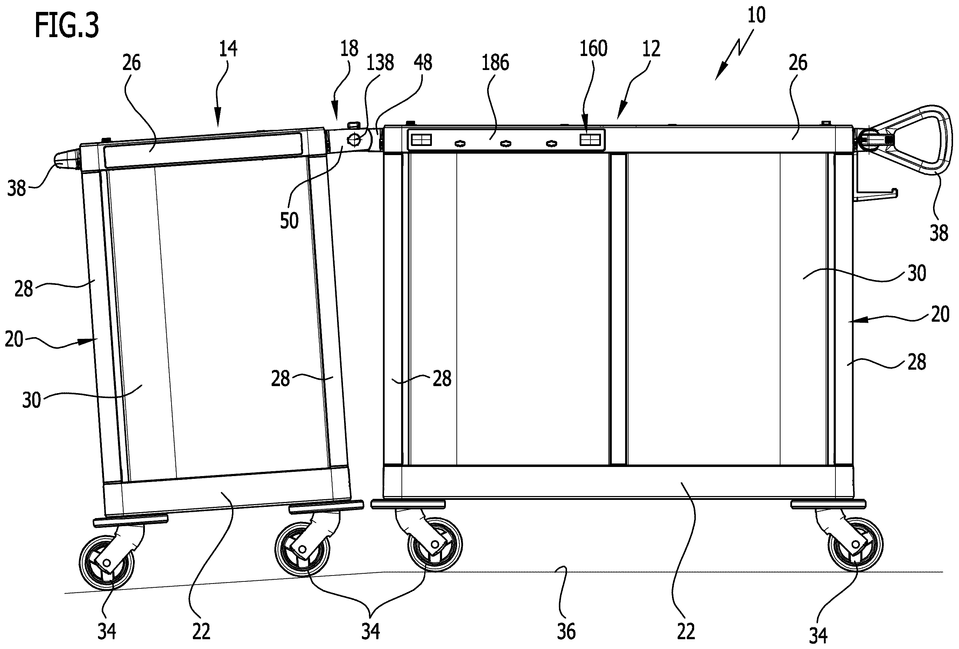

Über die Verbindungsteile 48, 50 sind somit die verbundenen Reinigungswagen 12, 14 relativ zueinander um die Schwenkachse 138 schwenkbar. Dies ist vorteilhaft zum Überfahren von Bodenunebenheiten, Schwellen oder zum Beispiel bei Rampenfahrt (Figur 3).

Aus der vorstehenden Beschreibung wird deutlich, dass die Verbindungseinrichtung 18 über die Verriegelungselemente 94, 130 selbstverriegelnd ist.

In dem Fall, in dem beim Verbinden der Verbindungsteile 48, 50 das Löseelement 118 die Lösestellung und der Verriegelungsstift 96 die Entriegelungsstellung einnehmen - entsprechend der Darstellung gemäß Figur 13 -, kann ebenfalls eine Selbstverriegelung erzielt werden. Das Kontaktelement 90 des Vorsprungbereiches 56 greift beim Annähern der Verbindungsteile 48, 50 in die Ausnehmung 72 ein. Auf diese Weise kann das Kontaktelement 90 das Löseelement 118 am Rastelement 128 kontaktieren und nach oben verschieben. Unter der Wirkung des Kontaktelementes 90 und/oder des Vorspannelementes 104 kann das Löseelement 118 weiter nach oben verschoben werden. Zugleich wird der Verriegelungsstift 96 in die Verriegelungsstellung verschoben. Es kann somit auch in diesem Fall eine Selbstverriegelung erfolgen.

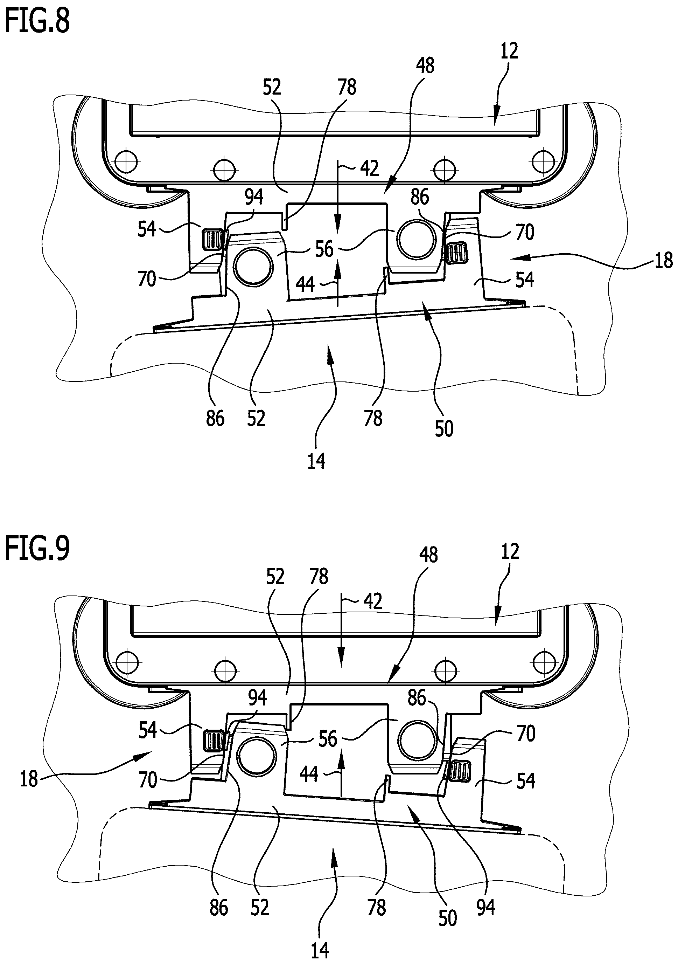

Vorteilhaft ist die Verjüngung beider Vorsprungbereiche 54, 56. Dies erleichtert es den Verbindungsteilen 48, 50, einander zu finden und die Vorsprungbereiche 54, 56 auszurichten, wenn die Reinigungswagen 12, 14 schief aufeinander zu bewegt werden, abweichend von der idealen Verbindungsrichtung 40. Dies ist in den Figuren 8 und 9 dargestellt. Hierbei weisen die durch die Pfeile 42, 44 definierten Orientierungen der Reinigungswagen 12, 14 eine Winkelstellung ein. Durch die geneigten Anlageelemente 70 und 86 ist es dem Benutzer erleichtert, die Verbindungsteile 48, 50 einander anzunähern um den Verriegelungsbereich 54 in den Zwischenraum 79 einzuführen und dadurch die Reinigungswagen 12, 14 in eine derartige Relativstellung zu bringen, dass die Verriegelungselemente 94 und 130 in Eingriff gelangen können. Auch in diesen Fällen können die Stützelemente 78 als Führungselemente wirken.

Stirnseitig weist der Vorsprungbereich 54 am Anlageelement 68 seitliche Fasen auf. In entsprechender Weise weist der Vorsprungbereich 56 stirnseitig am Anlageelement 84 seitliche Fasen auf. Durch diese Ausgestaltung, die eine jeweilige Verjüngung der Vorsprungbereiche 54, 56 am freien Ende bewirkt, lassen sich die Verbindungsteile 48, 50 noch einfacher miteinander koppeln.

Zur Entriegelung betätigt der Benutzer an jedem Verbindungsteil 48, 50 das Löseelement 118 durch Druck nach unten und überführt dieses in die Lösestellung. Dadurch werden die Verriegelungsstifte 96 in die Entriegelungsstellung überführt und außer Eingriff mit dem Sacklöchern 132 gebracht. Die Reinigungswagen 12, 14 können dadurch voneinander entfernt werden.

Vorteilhaft ist die Positionierung der Vorsprungbereiche 54, 56 zusammenwirkender Verbindungsteile 48 und 50 seitlich nebeneinander, quer und insbesondere senkrecht zur Verbindungsrichtung 40, nämlich in der Querrichtung 46. Dies erleichtert es einem Benutzer erheblich, die Reinigungswagen 12, 14 so relativ zueinander zu positionieren, dass eine zuverlässige Verbindung möglich ist. Durch die Positionierung der Vorsprungbereiche 54, 56 seitlich nebeneinander sind ferner die Verriegelungselemente 94 und 130 in korrekter Relativposition, um miteinander in Eingriff gebracht werden zu können. Aus diesem Grund weist die Verbindungseinrichtung 18 eine verbesserte Handhabbarkeit auf.

Im Sinne der vorstehenden Erläuterungen der Beschreibungseinleitung und insbesondere der Patentansprüche werden im vorliegenden Beispiel die Vorsprungbereiche 54 und 56 des Verbindungsteils 48 als erster bzw. dritter Vorsprungbereich angesehen und die Vorsprungbereiche 56, 54 des zweiten Verbindungsteils 50 als zweiter bzw. vierter Vorsprungbereich. Die Verriegelungselemente 94, 130 des ersten Verbindungsteils 48 werden als erstes bzw. drittes Verriegelungselement angesehen und die Verriegelungselemente 130, 94 des Verbindungsteils 50 als zweites bzw. viertes Verriegelungselement.

Im Verbindungszustand der Verbindungsteile 48, 50 ist zwischen den beiden Vorsprungbereichen 56 und den Basisbereichen 52, insbesondere deren Stirnflächen 80, ein eingefasster Durchgangsbereich 140 angeordnet. Im Durchgangsbereich 140 können beispielsweise Reinigungsutensilien angeordnet werden.

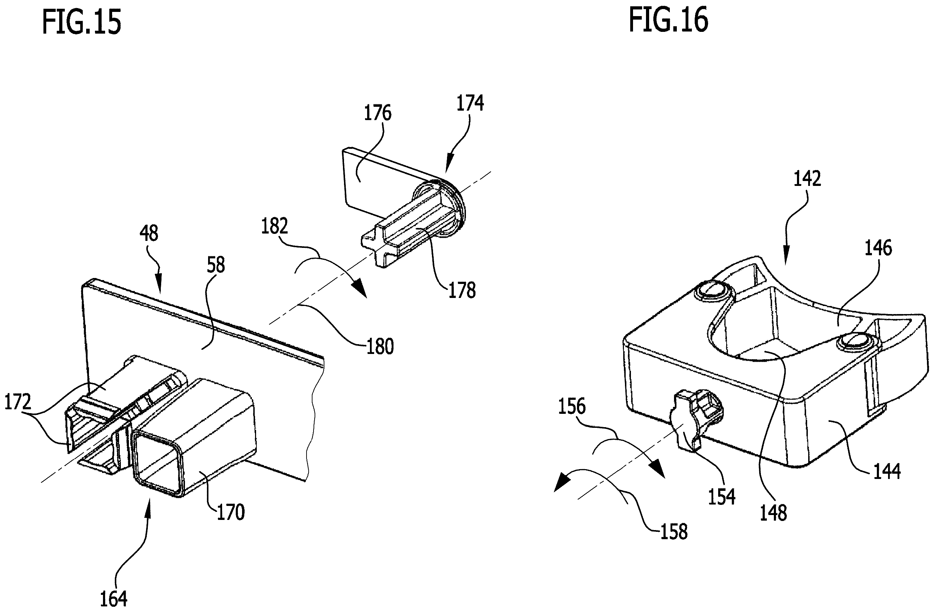

Das Reinigungssystem 10 kann mindestens eine Klemmhalterung 142 umfassen, die beispielhaft in Figur 16 dargestellt ist. Die Klemmhalterung 142 umfasst ein im Wesentlichen C-förmiges Halteteil 144, an dem ein elastisch verformbares Klemmteil 146 angeordnet ist.

Das Reinigungsutensil kann unter Verformung des Klemmteils 146 von diesem umgriffen und klemmend in einer Ausnehmung 148 des Halteteils 144 gehalten werden. Unter Aufweitung des Klemmteils 146 kann das Reinigungsutensil der Klemmhalterung 142 entnommen werden.

An den Verbindungsteilen 48, 50 ist jeweils ein Aufnahmeelement 150 angeordnet, an dem die Klemmhalterung 142 insbesondere lösbar befestigbar ist. Das Aufnahmeelement 150 weist eine Einführöffnung 152 auf, die insbesondere an der Stirnfläche 80 des Basisbereiches 52 gebildet sein kann. Die Klemmhalterung 142 wird vorzugsweise dann mit dem Verbindungsteil 48, 50 verbunden, wenn die Reinigungswagen 12, 14 voneinander gelöst sind. Das jeweilige Verbindungsteil 48, 50 kann dadurch gewissermaßen als Adaptervorrichtung für die Klemmhalterung 142 dienen.

Die Klemmhalterung 142 kann mittels einer Steck-Dreh-Verbindung bajonettartig mit dem Verbindungsteil 48, 50 verbunden werden. Hierzu kann ein Vorsprung 154 am Halteteil 144 in die Einführöffnung 152 eingeführt und dahinter mit dem Verbindungsteil 48, 50 verrastet werden (nicht gezeigt). Zu diesem Zweck kann die Klemmhalterung 142 zunächst um im Wesentlichen 90° gedreht werden (Pfeil 156) und der Vorsprung 154 in die Einführöffnung 152 eingeführt werden. Anschließend wird die Klemmhalterung 142 um im Wesentlichen 90° in die Gegenrichtung gedreht (Pfeil 158).

Wie bereits erwähnt kann das jeweilige Verbindungsteil 48, 50 lösbar mit dem Reinigungswagen 12, 14 verbunden werden. Zu diesem Zweck ist am jeweiligen Reinigungswagen 12, 14 mindestens ein Aufnahmeteil 160 zum Zusammenwirken mit dem Verbindungsteil 48, 50 angeordnet.

Die Aufnahmeteile 160 sind an jedem Reinigungswagen 12 bis 16 vorliegend identisch ausgestaltet. Dies gibt die Möglichkeit, jedes Verbindungsteil 48, 50 an jedem der Reinigungswagen 12 bis 16 anzubringen, was das Reinigungssystem 10 besonders vielseitig macht.

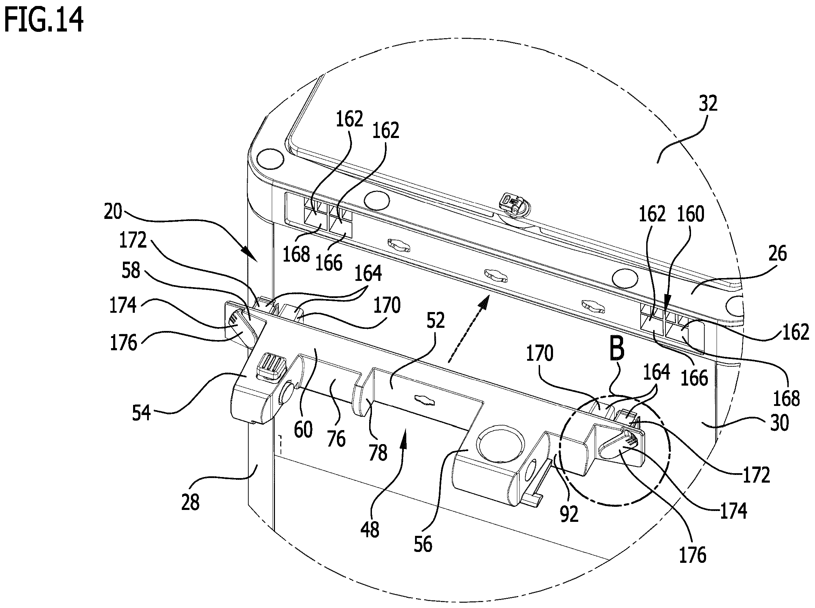

Das Aufnahmeteil 160 ist am Beispiel des Reinigungswagens 12 insbesondere in Figur 14 dargestellt. Das Aufnahmeteil 160 ist zum Beispiel vom Rahmenoberteil 26 gebildet und umfasst Kopplungselemente 162, die mit korrespondierenden Kopplungselementen 164 des Verbindungsteils 48 zusammenwirken können (dies gilt aufgrund der Gleichteile auch für das Verbindungsteil 50).

Die Kopplungselemente 162 umfassen im vorliegenden Fall Klemmaufnahmen 166 und Rastaufnahmen 168. Deren sind jeweils zwei vorgesehen. Die Kopplungselemente 164 umfassen Klemmvorsprünge 170 und Rastvorsprünge 172.

Die Klemmvorsprünge 170 sind den Klemmaufnahmen 166 zugeordnet und können darin klemmend fixiert werden. Die Rastvorsprünge 172 sind den Rastaufnahmen 168 zugeordnet und können mit diesen verrasten.

Im Ergebnis ist über die Kopplungselemente 162, 164 die Möglichkeit gegeben, das Verbindungsteil 48 durch Verklemmen und durch Verrasten, insbesondere durch Kraftschluss und durch Formschluss, am Aufnahmeteil 160 festzulegen. Durch Aufheben des Eingriffs der Kopplungselemente 162, 164 kann das Verbindungsteil 48 vom Aufnahmeteil 160 gelöst werden.

Sowohl das Verbinden als auch das Lösen ist vorliegend benutzerfreundlich manuell und insbesondere werkzeuglos möglich.

Es versteht sich, dass abweichend von obiger Beschreibung am Aufnahmeteil 160 Vorsprünge und am Verbindungsteil 48 Aufnahmen hierfür vorgesehen sein könnten. Günstiger ist indes die Anordnung der Aufnahmen am Aufnahmeteil 160, wodurch keine Kopplungselemente 162 über die Außenkontur des Reinigungswagens 12 hervorstehen.

Wie insbesondere in den Figuren 14 und 15 erkennbar ist, stehen die Kopplungselemente 164 vom plattenförmigen Abschnitt 58.

Die Rastvorsprünge 172 sind gruppiert am Verbindungsteil 48 angeordnet.

Beispielsweise ist jeweils eine Gruppe von vier Rastvorsprüngen 172 vorgesehen. Einer Gruppe von Rastvorsprüngen 172 ist ein Blockierelement 174 zugeordnet. Das Blockierelement 174 weist einen Betätigungsabschnitt 176 und einen Blockierabschnitt 178 auf. Der Blockierabschnitt 178 kann mittels des Betätigungsabschnittes 176 um eine Achse 180 gedreht werden.

Der Blockierabschnitt 178 greift in den Zwischenraum zwischen den Rastvorsprüngen 172 ein. In einer Blockierstellung liegt der Blockierabschnitt 178 mit im vorliegenden Fall +-förmigem Querschnitt an den Rastvorsprüngen 172 an. Dadurch sind die Rastvorsprünge 172 gegen Entrasten blockiert. Durch Verdrehen des Blockierabschnittes 178 um die Achse 180 können die Rastvorsprünge 172 demgegenüber entrasten. Ein Pfeil 182 in Figur 15 kennzeichnet die Drehrichtung des Blockierelementes 174 in eine Freigabestellung, um das Entrasten zu ermöglichen.

Auch beim Verrasten nimmt der Blockierabschnitt 178 eine Freigabestellung ein (Figur 14), um das Verrasten der Rastvorsprünge 172 mit den Rastaufnahmen 168 zu ermöglichen. Entgegen der Pfeilrichtung 182 kann der Blockierabschnitt 178 in die Blockierstellung überführt werden.

Die Betätigungsabschnitte 176 sind jeweils an den Endabschnitten 62, 64 angeordnet. Eine Kennzeichnungseinrichtung 184 mit Piktogrammen erlaubt es dem Benutzer festzustellen, welche Stellung das Blockierelement 174 jeweils einnimmt.

Günstig ist es bei den Reinigungswagen 12 bis 16, dass mehr als ein Aufnahmeteil 160 vorhanden sein kann. Die Figuren 1 und 3 stellen dies beispielhaft für den Reinigungswagen 12 dar. Hierbei ist stirnseitig ein Aufnahmeteil 160 vorgesehen, an dem das Verbindungsteil 48 angeordnet ist. An mindestens einer im Winkel zur Stirnseite angrenzenden Seite 186 ist ein weiteres Aufnahmeteil vorgesehen. Dies ermöglicht es, die Reinigungswagen 12 bis 16 nicht nur fluchtend miteinander zu verbinden, sondern im Fall des "längeren" Reinigungswagens 12 auch "über Eck".

Insbesondere kann auch eine Mehrfachverbindung vorgesehen sein. Beispielsweise ist günstigerweise mindestens eine Griffeinrichtung 38 an einem Aufnahmeteil 160 lösbar angebracht. Weitere Reinigungswagen können gewissermaßen wie Glieder einer Kette hintereinander angeordnet und miteinander verbunden werden. Selbstverständlich sind vorzugsweise "Über-Eck"-Verbindungen möglich.

Weiter ist vorzugsweise vorgesehen, dass an den Rahmenunterteilen 22 jeweils mindestens ein Aufnahmeteil 160 angeordnet ist. Dies erlaubt es, die Reinigungswagen bodennah über die Verbindungseinrichtung 18 miteinander zu verbinden. Auch bei der Positionierung der Aufnahmeteile 160 am Rahmenunterteil 22 kann vorgesehen sein, dass deren mehrere an unterschiedlichen Seiten der Reinigungswagen 12 bis 16 positioniert sind, im Hinblick auf eine möglichst vielseitige und flexible Verbindung der Reinigungswagen 12 bis 16.

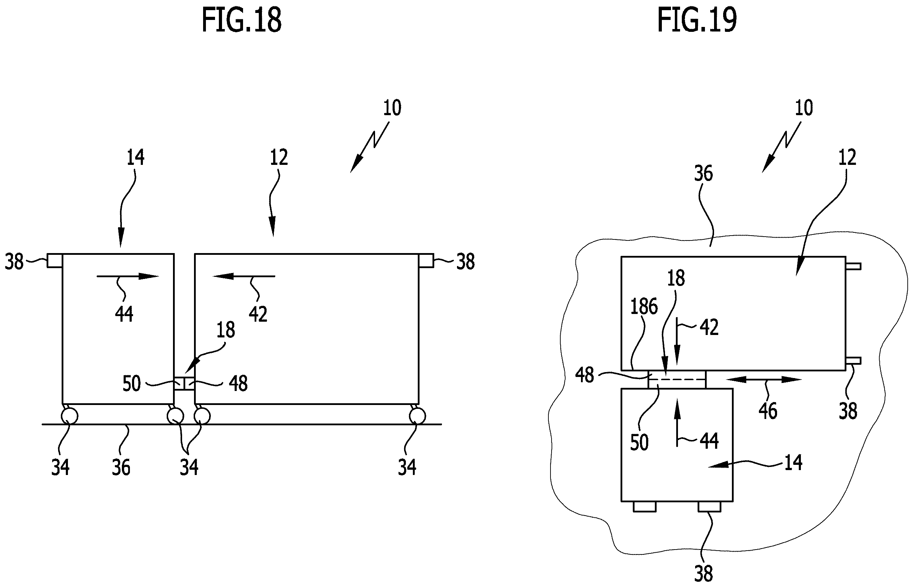

Die Figuren 18 und 19 zeigen schematisch die vorstehend beschriebenen Verbindungsmöglichkeiten der Reinigungswagen 12 und 14 miteinander.

Figur 18 zeigt in einer Seitenansicht, wie die Reinigungswagen 12, 14 miteinander verbunden sind. Dabei sind die Verbindungsteile 48 und 50 an jeweiligen Aufnahmeteilen 160 angebracht, die am jeweiligen Rahmenunterteil 22 angeordnet sind. Die Reinigungswagen 12, 14 sind in diesem Fall unten am Rahmen 20 miteinander verbunden.

Eine Verbindung der Reinigungswagen 12, 14 oben am Rahmen 20 miteinander - wie in den Figuren 1 bis 14 gezeigt - weist beispielsweise den Vorteil auf, dass die Verbindungseinrichtung 18 vom Benutzer besser eingesehen werden kann. Dies erleichtert das Ankoppeln der Reinigungswagen 12, 14 aneinander. In entsprechender Weise ist es für den Benutzer einfacher, die Reinigungswagen 12, 14 voneinander zu lösen, weil die Löseelemente 118 gut erreicht werden können.

Im Übrigen können Reinigungswerkzeuge und/oder Reinigungsutensilien durch die Durchgangsöffnung 136 und den Durchgangsbereich 140 hindurchgeführt werden und sich beispielsweise auf der Verbindungseinrichtung 18 abstützen. Auch die Klemmhalterung 142 kann oben am Rahmen handhabungsfreundlich erreicht werden.

Figur 19 zeigt eine Verbindung der Reinigungswagen 12, 14 "über Eck". Hierbei ist das Verbindungsteil 48 an dem an der Seite 186 angeordneten Aufnahmeteil 160 festgelegt.

Obige Ausführungen zeigen, dass auch mehr als zwei Wagen miteinander verbunden werden können. Insbesondere kann eine Kette von miteinander verbundenen Wagen gebildet werden. Zu diesem Zweck sind beispielsweise die Griffeinrichtungen 38 von den Reinigungswagen 12 und/oder 14 lösbar, wobei zu deren Befestigung vorzugsweise ein Aufnahmeteil 160 zum Einsatz kommen kann. Die Griffeinrichtung 38 kann durch das Verbindungsteil 48 oder 50 ersetzt werden, um an dieser Stelle einen weiteren Reinigungswagen anzukoppeln.

Selbstverständlich ist auch denkbar, mehr als zwei Reinigungswagen "über Eck" oder, gewissermaßen, im Pulk miteinander zu verbinden.

Es versteht sich, dass eine Verbindung der Reinigungswagen des erfindungsgemäßen Reinigungssystems "über Eck" auch mit am Rahmenunterteil 22 angeordneten Aufnahmeteilen vorgenommen werden kann.

### Bezugszeichenliste:

10 Reinigungssystem
12, 14, 16 Reinigungswagen
18 Verbindungseinrichtung
20 Rahmen
22 Rahmenunterteil
24 Höhenrichtung
26 Rahmenoberteil
28 Profilteil
30 Seitenwand
32 Deckenwand
34 Rolle
36 Bodenfläche
38 Griffeinrichtung
40 Verbindungsrichtung
42, 44 Pfeil
46 Querrichtung
48 erstes Verbindungsteil
50 zweites Verbindungsteil
52 Basisbereich
54, 56 Vorsprungbereich
58 plattenförmiger Abschnitt
60 Sockelabschnitt
62, 64 Endabschnitt
66 Seitenfläche
68 Anlageelement
69 Lagerelement
70 Anlageelement
72 Ausnehmung
74 untere Wand
76 Anlageelement
77 Lagerelement
78 Stützelement
79 Zwischenraum
80 Stirnfläche
82 Seitenfläche
84 Anlageelement
85 Lagerelement
86 Anlageelement
88 untere Wand
90 Kontaktelement
92 Anlageelement
93 Lagerelement
94 Verriegelungselement
96 Verriegelungsstift
98 Achse
100 Hülse
102 Verdrehsicherungselement
104 Vorspannelement
106 Schraubenfeder
108, 110 Anschlag
112 Aufgleitelement
114 Durchgangsöffnung
116 Aufgleitelement
118 Löseelement
120 Druckknopf
122 Abschnitt
124 Öffnung
126 Aufgleitelement
128 Rastelement
130 Verriegelungselement
132 Sackloch
136 Durchgangsöffnung
138 Schwenkachse
140 Durchgangsbereich
142 Klemmhalterung
144 Halteteil
146 Klemmteil
148 Ausnehmung
150 Aufnahmeelement
152 Einführöffnung
154 Vorsprung
156, 158 Pfeil
160 Aufnahmeteil
162, 164 Kopplungselement
166 Klemmaufnahme
168 Rastaufnahme
170 Klemmvorsprung
172 Rastvorsprung
174 Blockierelement
176 Betätigungsabschnitt
178 Blockierabschnitt
180 Achse
182 Pfeil
184 Kennzeichnungseinrichtung
186 Seite

## Patentansprüche

1. Verbindungseinrichtung zum Verbinden eines ersten Reinigungswagens (12) mit einem zweiten Reinigungswagen (14) entlang einer Verbindungsrichtung (40), jeweils ausgestaltet zur Aufnahme von Reinigungsutensilien und umfassend Rollen (34) zum Verfahren auf einer Bodenfläche (36), wobei die Verbindungseinrichtung (18) ein am ersten Reinigungswagen (12) festgelegtes oder festlegbares erstes Verbindungsteil (48)
und ein am zweiten Reinigungswagen (14) festgelegtes oder festlegbares zweites Verbindungsteil (50) umfasst,
wobei das jeweilige Verbindungsteil (48, 50) einen Basisbereich (52) und einen von diesem in Richtung des jeweils anderen Verbindungsteils (48, 50) hervorspringenden Vorsprungbereich (54, 56) umfasst,
wobei am ersten Vorsprungbereich (54) des ersten Verbindungsteils (48) ein erstes Verriegelungselement (94) und am zweiten Vorsprungbereich (56) des zweiten Verbindungsteils (50) ein zweites Verriegelungselement (130) angeordnet ist, wobei die Verriegelungselemente (94, 130) ausgebildet sind,
in einer Verriegelungsstellung miteinander in Eingriff zu stehen und in einer Entriegelungsstellung außer Eingriff zu stehen,
und wobei die Vorsprungbereiche (54, 56) quer und insbesondere senkrecht zur Verbindungsrichtung (40) seitlich nebeneinander angeordnet sind, **dadurch gekennzeichnet, dass** am ersten Vorsprungbereich (54) und/oder am zweiten Vorsprungbereich (56) eine Durchgangsöffnung (136) zum Hindurchführen eines Reinigungswerkzeugs gebildet ist.

2. Verbindungseinrichtung nach Anspruch 1, **dadurch gekennzeichnet, dass** zumindest eines der Folgenden gilt:
- der erste Vorsprungbereich (54) und der zweite Vorsprungbereich (56) sind unmittelbar seitlich nebeneinander angeordnet;
- die Vorsprungbereiche (54, 56) des ersten Verbindungsteils (48) und des zweiten Verbindungsteils (50) liegen seitlich über korrespondierende Anlageelemente (70, 86) aneinander an, vorzugsweise weist zumindest einer der Vorsprungbereiche (54, 56) im Bereich des Anlageelementes (70, 86) ausgehend vom Basisbereich (52) in Richtung des jeweils anderen Verbindungsteils (48, 50) eine Verjüngung auf.

3. Verbindungseinrichtung nach einem der voranstehenden Ansprüche, **dadurch gekennzeichnet, dass**
- zumindest einer der Vorsprungbereiche (54, 56) weist an einer dem Basisbereich (52) abgewandten Seite Abschrägungen auf, um die Relativausrichtung der Verbindungsteile (48, 50) beim Annähern aneinander zu erleichtern;
- das erste Verriegelungselement (94) und das zweite Verriegelungselement (130) stehen in der Verriegelungsstellung miteinander kraft- und/oder formschlüssig in Eingriff;
- das erste Verriegelungselement (94) und das zweite Verriegelungselement (130) umfassen einen an einem der Vorsprungbereiche (54, 56) beweglich angeordneten Verriegelungsvorsprung (94) und eine am jeweils anderen Vorsprungbereich (54, 56) angeordnete Aufnahme (130) für den Vorsprung (94), wobei insbesondere das erste Verriegelungselement (94) der Vorsprung (94) ist und das zweite Verriegelungselement (130) die Aufnahme (130).

4. Verbindungseinrichtung nach einem der voranstehenden Ansprüche, **dadurch gekennzeichnet, dass** mindestens ein Verriegelungselement (94) beweglich und insbesondere verschieblich am Vorsprungbereich (54) gelagert ist, und/oder dass das erste Verriegelungselement (94) und das zweite Verriegelungselement (130), insbesondere der Vorsprung (94) und die Aufnahme (130), koaxial zueinander ausgerichtet bezüglich einer gemeinsamen Achse (98) sind.

5. Verbindungseinrichtung nach Anspruch 4, **dadurch gekennzeichnet, dass** zumindest eines der Folgenden gilt:
- das erste Verbindungsteil (48) und das zweite Verbindungsteil (50) sind relativ zueinander um die Achse (138) schwenkbar zueinander ausgestaltet;
- die Achse (98) ist quer und insbesondere senkrecht zur Verbindungsrichtung (40) ausgestaltet;
- die Achse (98) ist parallel zu einer von Rollen (34) der Reinigungswagen (12, 14) definierten Kontaktebene zum Aufstellen auf der Bodenfläche (36) ausgerichtet.

6. Verbindungseinrichtung nach Anspruch 5, **dadurch gekennzeichnet, dass** ein Vorsprungbereich (54, 56) eines Verbindungsteils (48, 50) und ein Basisbereich (52) des anderen Verbindungsteiles (48, 50) korrespondierende Anlageelemente (68, 76, 84, 92) ausbilden, wobei der Vorsprungbereich (54, 56) mit einer Stirnseite am Basisbereich (52) anliegt, vorzugsweise dass ein jeweiliger Vorsprungbereich (54, 56) und der Basisbereich (52) des jeweils anderen Verbindungsteils (48, 50) korrespondierende Anlageelemente (68, 76, 84, 92) ausbilden, insbesondere dass die Anlageelemente (68, 76, 84, 92) korrespondierende Lagerelemente (69, 77, 85, 93) beim Verschwenken der Verbindungsteile (48, 50) relativ zueinander ausbilden.

7. Verbindungseinrichtung nach einem der voranstehenden Ansprüche, **dadurch gekennzeichnet, dass** das erste Verriegelungselement (94) beim Verbinden der Verbindungsteile (48, 50) miteinander selbsttätig zur Einnahme der Verriegelungsstellung mit dem zweiten Verriegelungselement (130) in Eingriff bringbar ist und/oder dass die Verbindungseinrichtung (18) ein Vorspannelement (104) umfasst und dass das erste Verriegelungselement (94) über das Vorspannelement (104) in Richtung auf die Verriegelungsstellung vorgespannt ist.

8. Verbindungseinrichtung nach einem der voranstehenden Ansprüche,
**dadurch gekennzeichnet, dass** zumindest eines der Folgenden gilt:
- an mindestens einem der Verbindungsteile (48, 50) ist ein Stützelement (78) angeordnet und der Vorsprungbereich (54, 56) des jeweils anderen Verbindungsteils (48, 50) ist zwischen dem Vorsprungbereich (54, 56) des erstgenannten Verbindungsteils (48, 50) und dem Stützelement (78) angeordnet;
- die Verbindungseinrichtung (18) umfasst ein mit dem ersten Verriegelungselement (94) in Wirkverbindung stehendes Löseelement (118), wobei das erste Verriegelungselement (94) mittels des Löseelementes (118) von der Verriegelungsstellung in die Entriegelungsstellung überführbar ist.

9. Verbindungseinrichtung nach einem der voranstehenden Ansprüche,
**dadurch gekennzeichnet, dass** das erste Verbindungsteil (48) und das zweite Verbindungsteil (50) jeweils zwei Vorsprungbereiche (54, 56) umfassen, wobei am ersten Verbindungsteil (48) der erste Vorsprungbereich (54) und das erste Verriegelungselement (94) und am zweiten Verbindungsteil (50) der zweite Vorsprungbereich (56) und das zweite Verriegelungselement (130) angeordnet sind, und wobei am ersten Verbindungsteil (48) ein dritter Vorsprungbereich (56) und ein drittes Verriegelungselement (130) und am zweiten Verbindungsteil (50) ein vierter Vorsprungbereich (54) ein viertes Verriegelungselement (94) angeordnet sind.

10. Verbindungseinrichtung nach Anspruch 9, **dadurch gekennzeichnet, dass** zumindest eines der Folgenden gilt:
- quer und insbesondere senkrecht zur Verbindungsrichtung (40) sind der zweite Vorsprungbereich (56) und der dritte Vorsprungbereich (56) zwischen dem ersten Vorsprungbereich (54) und dem vierten Vorsprungbereich (54) angeordnet;
- der vierte Vorsprungbereich (54) ist identisch zum ersten Vorsprungbereich (54) ausgestaltet und/oder der dritte Vorsprungbereich (56) ist identisch zum zweiten Vorsprungbereich (56) ausgestaltet;
- das vierte Verriegelungselement (94) ist identisch zum ersten Verriegelungselement (94) ausgestaltet und/oder das dritte Verriegelungselement (130) ist identisch zum zweiten Verriegelungselement (130) ausgestaltet.

11. Verbindungseinrichtung nach einem der voranstehenden Ansprüche, **dadurch gekennzeichnet, dass** die Basisbereiche (52) der Verbindungsteile (48, 50) identisch ausgestaltet sind und/oder dass das erste Verbindungsteil (48) und das zweite Verbindungsteil (50) als Gleichteile ausgestaltet sind.

12. Verbindungseinrichtung nach einem der voranstehenden Ansprüche, **dadurch gekennzeichnet, dass** zumindest eines der Folgenden gilt:
- zwischen einem Vorsprungbereich (56) des ersten Verbindungsteils (48) und einem Vorsprungbereich (56) des zweiten Verbindungsteils (50), insbesondere zwischen dem zweiten Vorsprungbereich (56) und dem dritten Vorsprungbereich (56), ist ein zumindest teilweise von den Basisbereichen (52) und den beiden Vorsprungbereichen (56) eingefasster Durchgangsbereich (140) gebildet;
- an zumindest einem der Verbindungsteile (48, 50) ist ein Aufnahmeelement (150) zum Anbringen einer Klemmhalterung (142) für Reinigungsutensilien angeordnet.

13. Reinigungssystem, umfassend einen ersten Reinigungswagen (12) und einen zweiten Reinigungswagen (14), die jeweils zur Aufnahme von Reinigungsutensilien ausgestaltet sind und Rollen (34) zum Verfahren auf einer Bodenfläche (36) umfassen, wobei bevorzugt zumindest ein Reinigungswagen (12, 14) mittels einer Griffeinrichtung (38) handgeführt ist, wobei das Reinigungssystem (10) eine Verbindungseinrichtung (18) nach einem der voranstehenden Ansprüche umfasst,
wobei das erste Verbindungteil (48) am ersten Reinigungswagen (12) festgelegt oder festlegbar ist und
wobei das zweite Verbindungteil (50) am zweiten Reinigungswagen (14) festgelegt oder festlegbar ist.

14. Reinigungssystem nach Anspruch 13, **dadurch gekennzeichnet, dass** an zumindest einem Reinigungswagen (12, 14) mindestens ein Aufnahmeteil (160) angeordnet oder gebildet ist, an dem Kopplungselemente (162) angeordnet sind, die mit korrespondierend dazu ausgestalteten Kopplungselementen (164) zumindest eines Verbindungsteils (48, 50) zusammenwirken, zum lösbaren Verbinden des Verbindungsteils (48, 50) mit dem Reinigungswagen (12, 14), wobei vorzugsweise an jedem Reinigungswagen (12, 14) zumindest ein Aufnahmeteil (160) angeordnet oder gebildet ist.

15. Reinigungssystem nach Anspruch 14, **dadurch gekennzeichnet, dass** zumindest eines der Folgenden gilt:
- das Verbindungsteil (48, 50) ist manuell und/oder werkzeuglos mit dem Reinigungswagen (12, 14) verbindbar;
- die Kopplungselemente (162, 164) wirken durch Kraft- und/oder Formschluss zusammen;
- an dem Reinigungswagen (12, 14) sind zwei oder mehr Aufnahmeteile (160) an unterschiedlichen Positionen angeordnet oder gebildet, wobei das Verbindungsteil (48, 50) wahlweise mit einem der Aufnahmeteile (160) verbindbar ist.

16. Reinigungssystem nach Anspruch 14 oder 15, **dadurch gekennzeichnet, dass** der Reinigungswagen (12, 14) einen Rahmen (20) umfasst mit einem Rahmenunterteil (22), an dem die Rollen (34) gehalten sind, und mit mindestens einem oberhalb des Rahmenunterteils (22) angeordneten und im Abstand zum Rahmenunterteil (22) angeordneten Rahmenoberteil (26), und dass zumindest eines der Folgenden gilt:
- mindestens ein Aufnahmeteil (160) ist am Rahmenoberteil (26) angeordnet oder gebildet;
- mindestens ein Aufnahmeteil (160) ist am Rahmenunterteil (22) angeordnet oder gebildet.

17. Reinigungssystem nach Anspruch 16, **dadurch gekennzeichnet, dass** am Rahmenoberteil (26) und/oder am Rahmenunterteil (22) zwei oder mehr Aufnahmeteile (160) angeordnet oder gebildet sind und dass am Rahmenoberteil (26) und/oder am Rahmenunterteil (22) zwei Aufnahmeteile (160):
- an voneinander abgewandten Seiten des Rahmens (20) angeordnet sind; und/oder
- an zwei im Winkel aneinandergrenzenden Seiten des Rahmens (20) angeordnet sind.

## Claims

1. Connection device for connecting a first cleaning cart (12) to a second cleaning cart (14) along a connecting direction (40), each configured for receiving cleaning utensils and comprising rollers (34) for moving on a ground surface (36), wherein the connection device (18) comprises a first connecting part (48) fixed or fixable to the first cleaning cart (12) and a second connecting part (50) fixed or fixable to the second cleaning cart (14),
wherein the respective connecting part (48, 50) comprises a base region (52) and a projection region (54, 56) projecting therefrom in a direction towards the respective other connecting part (48, 50),
wherein a first locking element (94) is arranged at the first projection region (54) of the first connecting part (48) and a second locking element (94) is arranged at the second projection region (56) of the second connecting part (50), wherein the locking elements (94, 130) are configured
to be in engagement with one another when in a locking position and to be out of engagement when in an unlocking position,
and wherein the projection regions (54, 56) are arranged transversely and in particular perpendicularly to the connecting direction (40), in lateral side-by-side relation to one another, **characterized in that** a through-opening (136) is formed at the first projection region (54) and/or at the second projection region (56) for passing a cleaning tool therethrough.

2. Connection device in accordance with claim 1, **characterized in that** at least one of the following applies:
- the first projection region (54) and the second projection region (56) are arranged in direct lateral side-by-side relation to one another;
- the projection regions (54, 56) of the first connecting part (48) and the second connecting part (50) are in contact laterally against one another via corresponding contact elements (70, 86), preferably at least one of the projection regions (54, 56) has, in the area of the contact element (70, 86) thereof, a taper starting from the base region (52) in a direction towards the respective other connecting part (48, 50).

3. Connection device in accordance with any one of the preceding claims, **characterized in that**
- at least one of the projection regions (54, 56) has bevels on a side thereof that faces away from the base region (52) in order to facilitate the relative orientation of the connecting parts (48, 50) when they are approximated to one another;
- when in the locking position, the first locking element (94) and the second locking element (130) are in engagement with one another in a force-locking and/or form-locking manner;
- the first locking element (94) and the second locking element (130) comprise a locking projection (94) movably arranged on one of the projection regions (54, 56) and a receptacle (130) for the projection (94) that is arranged on the respective other projection region (54, 56), wherein in particular the first locking element (94) is the projection (94) and the second locking element (130) is the receptacle (130).

4. Connection device in accordance with any one of the preceding claims, **characterized in that** at least one locking element (94) is movably and in particular displaceably supported on the projection region (54), and/or in that the first locking element (94) and the second locking element (130), in particular the projection (94) and the receptacle (130), are oriented in a coaxial relation to one another, with respect to a common axis (98).

5. Connection device in accordance with claim 4, **characterized in that** at least one of the following applies:
- the first connecting part (48) and the second connecting part (50) are configured to be pivotable relative to one another about the axis (138);
- the axis (98) is configured transversely and in particular perpendicularly to the connecting direction (40);
- the axis (98) is oriented parallel to a contact plane defined by rollers (34) of the cleaning carts (12, 14) for supporting same on the ground surface (36).

6. Connection device in accordance with claim 5, **characterized in that** a projection region (54, 56) of one connecting part (48, 50) and a base region (52) of the other connecting part (48, 50) form corresponding contact elements (68, 76, 84, 92), wherein the projection region (54, 56), at an end face thereof, is in contact against the base region (52), preferably wherein a respective projection region (54, 56) and the base region (52) of the respective other connecting part (48, 50) form corresponding contact elements (68, 76, 84, 92), in particular **in that** the contact elements (68, 76, 84, 92) form corresponding bearing elements (69, 77, 85, 93) when the connecting parts (48, 50) are pivoted relative to one another.

7. Connection device in accordance with any one of the preceding claims, **characterized in that**, when the connecting parts (48, 50) are connected to one another, the first locking element (98) is brought into engagement with the second locking element (130) automatically to assume the locking position and/or **in that** the connection device (18) comprises a biasing element (104) and **in that** the first locking element (94) is biased in a direction towards the locking position via the biasing element (104).

8. Connection device in accordance with any one of the preceding claims, **characterized in that** at least one of the following applies:
- a support element (78) is arranged at at least one of the connecting parts (48, 50) and **in that** the projection region (54, 56) of the respective other connecting part (48, 50) is arranged between the projection region (54, 56) of the former connecting part (48, 50) and the support element (78);
- the connection device (18) comprises a release element (118) operatively connected to the first locking element (94), wherein the first locking element (94) is transferable from the locking position to the unlocking position by way of the release element (118).

9. Connection device in accordance with any one of the preceding claims, **characterized in that** the first connecting part (48) and the second connecting part (50) each comprise two projection regions (54, 56), wherein the first projection region (54) and the first locking element (94) are arranged at the first connecting part (48) and the second projection region (56) and the second locking element (130) are arranged at the second connecting part (50), and wherein a third projection region (56) and a third locking element (130) are arranged at the first connecting part (48) and a fourth projection region (54) and a fourth locking element (94) are arranged at the second connecting part (50).

10. Connection device in accordance with claim 9, **characterized in that** at least one of the following applies:
- the second projection region (56) and the third projection region (56) are arranged between the first projection region (54) and the fourth projection region (54), in a direction transverse and in particular perpendicular to the connecting direction (40);
- the fourth projection region (54) is configured identically to the first projection region (54) and/or the third projection region (56) is configured identically to the second projection region (56);
- the fourth locking element (94) is configured identically to the first locking element (94) and/or the third locking element (130) is configured identically to the second locking element (130).

11. Connection device in accordance with any one of the preceding claims, **characterized in that** the base regions (52) of the connecting parts (48, 50) are identically configured and/or **in that** the first connecting part (48) and the second connecting part (50) are configured as identical parts.

12. Connection device in accordance with any one of the preceding claims, **characterized in that** at least one of the following applies:
- formed between a projection region (56) of the first connecting part (48) and a projection region (56) of the second connecting part (50), in particular between the second projection region (56) and the third projection region (56), is a pass-through region (140) which is at least partially enclosed by the base regions (52) and the two projection regions (56);
- arranged at at least one of the connecting parts (48, 50) is a receiving element (150) for attaching a clamping holder (142) for cleaning utensils.

13. Cleaning system, comprising a first cleaning cart (12) and a second cleaning cart (14), which are each configured for receiving cleaning utensils and comprise rollers (34) for moving on a ground surface (36), wherein preferably at least one cleaning cart (12, 14) is hand-guided by way of a handle device (38), wherein the cleaning system (10) comprises a connection device (18) in accordance with any one of the preceding claims,
wherein the first connecting part (48) is fixed or fixable to the first cleaning cart (12) and
wherein the second connecting part (50) is fixed or fixable to the second cleaning cart (14).

14. Cleaning system in accordance with claim 13, **characterized in that** arranged or formed at at least one cleaning cart (12, 14) is at least one receiving part (160) at which coupling elements (162) are arranged which cooperate with coupling elements (164), configured correspondingly thereto, of at least one connecting part (48, 50), for releasably connecting the connecting part (48, 50) to the cleaning cart (12, 14), wherein preferably at least one receiving part (160) is arranged or formed at each cleaning cart (12, 14).

15. Cleaning system in accordance with claim 14, **characterized in that** at least one of the following applies:
- the connecting part (48, 50) is connectable to the cleaning cart (12, 14) by hand and/or without tools;
- the coupling elements (162, 164) cooperate by a force-locking and/or form-locking connection;
- two or more receiving parts (160) are arranged or formed at different positions on the cleaning cart (12, 14), wherein the connecting part (48, 50) is selectively connectable to one of the receiving parts (160).

16. Cleaning system in accordance with claim 14 or 15, **characterized in that** the cleaning cart (12, 14) comprises a frame (20) having a frame lower part (22) to which the rollers (34) are held, and having at least one frame upper part (26) arranged above the frame lower part (22) and arranged a distance apart from the frame lower part (22), and **in that** at least one of the following applies:
- at least one receiving part (160) is arranged or formed at the frame upper part (26);
- at least one receiving part (160) is arranged or formed at the frame lower part (22).

17. Cleaning system in accordance with claim 16, **characterized in that** two or more receiving parts (160) are arranged or formed at the frame upper part (26) and/or at the frame lower part (22), and **in that** two receiving parts are arranged at the frame upper part (26) and/or at the frame lower part (22):
- on sides of the frame (20) that face away from one another; and/or
- on two sides of the frame (20) adjacent to one another at an angle.

## Revendications

1. Dispositif de liaison pour raccorder un premier chariot de nettoyage (12) à un deuxième chariot de nettoyage (14) le long d'une direction de liaison (40), chacun étant conçu pour recevoir des ustensiles de nettoyage et comprenant des roulettes (34) pour le déplacement sur une surface au sol (36), le dispositif de liaison (18) comprenant
une première partie de liaison (48) fixée ou pouvant être fixée sur le premier chariot de nettoyage (12)
et une deuxième partie de liaison (50) fixée ou pouvant être fixée sur le deuxième chariot de nettoyage (14),
la partie de liaison respective (48, 50) comprenant une zone de base (52) et une zone en saillie (54, 56) faisant saillie à partir de celle-ci en direction de l'autre partie de liaison respective (48, 50), un premier élément de verrouillage (94) étant agencé sur la première zone en saillie (54) de la première partie de liaison (48) et un deuxième élément de verrouillage (130) étant agencé sur la deuxième zone en saillie (56) de la deuxième partie de liaison (50), les éléments de verrouillage (94, 130) étant conçus
pour s'engager l'un dans l'autre dans une position de verrouillage et pour se désengager dans une position de déverrouillage, et les zones en saillie (54, 56) étant agencées latéralement l'une à côté de l'autre transversalement et, en particulier, perpendiculairement à la direction de liaison (40), **caractérisé en ce que** qu'une ouverture de passage (136) est formée sur la première zone en saillie (54) et/ou sur la deuxième zone en saillie (56) pour le passage d'un outil de nettoyage.

2. Dispositif de liaison selon la revendication 1, **caractérisé en ce qu'**au moins l'une des conditions suivantes est remplie :
- la première zone en saillie (54) et la deuxième zone en saillie (56) sont agencées directement côte à côte ;
- les zones en saillie (54, 56) de la première partie de liaison (48) et de la deuxième partie de liaison (50) sont en contact latéral l'une avec l'autre par l'intermédiaire d'éléments de positionnement correspondants (70, 86) ; de préférence, au moins l'une des zones en saillie (54, 56) présente, dans la zone de l'élément de positionnement (70, 86), à partir de la zone de base (52) en direction de l'autre partie de liaison (48, 50), un rétrécissement.

3. Dispositif de liaison selon l'une des revendications précédentes, **caractérisé en ce que**
- au moins l'une des zones en saillie (54, 56) présente, sur un côté opposé à la zone de base (52), des biseaux afin de faciliter l'alignement relatif des parties de liaison (48, 50) lors de leur rapprochement ;
- le premier élément de verrouillage (94) et le deuxième élément de verrouillage (130) sont en prise par complémentarité de forme et/ou par adhérence dans la position de verrouillage ;
- le premier élément de verrouillage (94) et le deuxième élément de verrouillage (130) comprennent une saillie de verrouillage (94) agencée de manière mobile sur l'une des zones en saillie (54, 56) et un logement (130) agencé sur l'autre zone en saillie (54, 56) pour la saillie (94), le premier élément de verrouillage (94) étant en particulier la saillie (94) et le deuxième élément de verrouillage (130) étant le logement (130).

4. Dispositif de liaison selon l'une des revendications précédentes, **caractérisé en ce qu'**au moins un élément de verrouillage (94) est monté de manière mobile et en particulier de manière coulissante sur la zone en saillie (54), et/ou que le premier élément de verrouillage (94) et le deuxième élément de verrouillage (130), en particulier la saillie (94) et le logement (130), sont alignés coaxialement l'un par rapport à l'autre par rapport à un axe commun (98).

5. Dispositif de liaison selon la revendication 4, **caractérisé en ce qu'**au moins l'une des caractéristiques suivantes s'applique :
- la première partie de liaison (48) et la deuxième partie de liaison (50) sont conçues de manière à pouvoir pivoter l'une par rapport à l'autre autour de l'axe (138) ;
- l'axe (98) est transversal et, en particulier, perpendiculaire à la direction de liaison (40) ;
- l'axe (98) est parallèle à un plan de contact défini par les roulettes (34) des chariots de nettoyage (12, 14) pour la mise en place sur la surface au sol (36).

6. Dispositif de liaison selon la revendication 5, **caractérisé en ce qu'**une zone en saillie (54, 56) d'une partie de liaison (48, 50) et une zone de base (52) de l'autre partie de liaison (48, 50) forment des éléments de positionnement correspondants (68, 76, 84, 92), la zone en saillie (54, 56) s'appuyant avec une face frontale contre la zone de base (52), de préférence une zone en saillie (54, 56) et la zone de base (52) de l'autre partie de liaison (48, 50) formant des éléments de positionnement correspondants (68, 76, 84, 92), en particulier que les éléments de positionnement (68, 76, 84, 92) forment des éléments de palier correspondants (69, 77, 85, 93) lors du pivotement des parties de liaison (48, 50) les unes par rapport aux autres.

7. Dispositif de liaison selon l'une des revendications précédentes, **caractérisé en ce que** le premier élément de verrouillage (94), lors de la liaison des parties de liaison (48, 50) entre elles, peut être mis en prise automatiquement avec le deuxième élément de verrouillage (130) pour prendre la position de verrouillage et/ou que le dispositif de liaison (18) comprend un élément de précontrainte (104) et **en ce que** le premier élément de verrouillage (94) est précontraint via l'élément de précontrainte (104) en direction de la position de verrouillage.

8. Dispositif de liaison selon l'une des revendications précédentes, **caractérisé en ce qu'**au moins l'une des conditions suivantes est remplie :
- un élément d'appui (78) est agencé sur au moins l'une des parties de liaison (48, 50) et la zone en saillie (54, 56) de l'autre partie de liaison (48, 50) est agencée entre la zone en saillie (54, 56) de la première partie de liaison (48, 50) et l'élément d'appui (78) ;
- le dispositif de liaison (18) comprend un élément de déverrouillage (118) en liaison active avec le premier élément de verrouillage (94), le premier élément de verrouillage (94) pouvant être transféré de la position de verrouillage à la position de déverrouillage au moyen de l'élément de déverrouillage (118).

9. Dispositif de liaison selon l'une des revendications précédentes, **caractérisé en ce que** la première partie de liaison (48) et la deuxième partie de liaison (50) comprennent chacune deux zones en saillie (54, 56), la première zone en saillie (54) et le premier élément de verrouillage (94) étant agencés sur la première partie de liaison (48) et la deuxième zone en saillie (56) et le deuxième élément de verrouillage (130) étant agencés sur la deuxième partie de liaison (50), et une troisième zone en saillie (56) et un troisième élément de verrouillage (130) étant agencés sur la première partie de liaison (48) et une quatrième zone en saillie (54) et un quatrième élément de verrouillage (94) étant agencés sur la deuxième partie de liaison (50).

10. Dispositif de liaison selon la revendication 9, **caractérisé en ce qu'**au moins l'une des conditions suivantes est remplie :
- la deuxième zone en saillie (56) et la troisième zone en saillie (56) sont agencées transversalement et, en particulier, perpendiculairement à la direction de liaison (40) entre la première zone en saillie (54) et la quatrième zone en saillie (54) ;
- la quatrième zone en saillie (54) est identique à la première zone en saillie (54) et/ou la troisième zone en saillie (56) est identique à la deuxième zone en saillie (56) ;
- le quatrième élément de verrouillage (94) est identique au premier élément de verrouillage (94) et/ou le troisième élément de verrouillage (130) est identique au deuxième élément de verrouillage (130).

11. Dispositif de liaison selon l'une des revendications précédentes, **caractérisé en ce que** les zones de base (52) des parties de liaison (48, 50) sont identiques et/ou **en ce que** la première partie de liaison (48) et la deuxième partie de liaison (50) sont conçues comme des parties identiques.

12. Dispositif de liaison selon l'une des revendications précédentes, **caractérisé en ce qu'**au moins l'une des conditions suivantes est remplie :
- entre une zone en saillie (56) de la première partie de liaison (48) et une zone en saillie (56) de la deuxième partie de liaison (50), en particulier entre la deuxième zone en saillie (56) et la troisième zone en saillie (56), une zone de passage (140) est formée, au moins en partie, par les zones de base (52) et les deux zones en saillie (56) ;
- un élément de réception (150) est agencé sur au moins l'une des parties de liaison (48, 50) pour la fixation d'un support de serrage (142) pour des ustensiles de nettoyage.

13. Système de nettoyage comprenant un premier chariot de nettoyage (12) et un deuxième chariot de nettoyage (14) qui sont chacun conçus pour recevoir des ustensiles de nettoyage et comprennent des roulettes (34) pour se déplacer sur une surface au sol (36), au moins un chariot de nettoyage (12, 14) étant de préférence guidé à la main au moyen d'un dispositif de préhension (38),
le système de nettoyage (10) comprenant un dispositif de liaison (18) selon l'une des revendications précédentes,
la première partie de liaison (48) étant fixée ou pouvant être fixée sur le premier chariot de nettoyage (12) et
la deuxième partie de liaison (50) étant fixée ou pouvant être fixée sur le deuxième chariot de nettoyage (14).

14. Système de nettoyage selon la revendication 13, **caractérisé en ce qu'**au moins une partie de réception (160) est agencée ou formée sur au moins un chariot de nettoyage (12, 14), sur laquelle sont agencés des éléments d'accouplement (162) qui coopèrent avec des éléments d'accouplement (164) de conception correspondante d'au moins une partie de liaison (48, 50) pour relier de manière amovible la partie de liaison (48, 50) au chariot de nettoyage (12, 14), au moins une partie de réception (160) étant de préférence agencée ou formée sur chaque chariot de nettoyage (12, 14).

15. Système de nettoyage selon la revendication 14, **caractérisé en ce qu'**au moins l'une des caractéristiques suivantes s'applique :
- la partie de liaison (48, 50) peut être reliée manuellement et/ou sans outil au chariot de nettoyage (12, 14) ;
- les éléments d'accouplement (162, 164) coopèrent par complémentarité de forme ou par adhérence ;
- deux ou plusieurs parties de réception (160) sont agencées ou formées à différents emplacements sur le chariot de nettoyage (12, 14), la partie de liaison (48, 50) pouvant être reliée à l'une des parties de réception (160), au choix.

16. Système de nettoyage selon la revendication 14 ou 15, **caractérisé en ce que** le chariot de nettoyage (12, 14) comprend un cadre (20) avec une partie inférieure (22) sur laquelle sont maintenues les roulettes (34), et avec au moins une partie supérieure (26) agencée au-dessus de la partie inférieure (22) du cadre et à distance de la partie inférieure (22), et qu'au moins l'une des caractéristiques suivantes s'applique :
- au moins une partie de réception (160) est agencée ou formée sur la partie supérieure du châssis (26) ;
- au moins une partie de réception (160) est agencée ou formée sur la partie inférieure du châssis (22).

17. Système de nettoyage selon la revendication 16, **caractérisé en ce que** deux ou plusieurs parties de réception (160) sont agencées ou formées sur la partie supérieure (26) du cadre et/ou sur la partie inférieure (22) du cadre et **en ce que**, sur la partie supérieure (26) du cadre et/ou sur la partie inférieure (22) du cadre, deux parties de réception (160) :
- sont agencées sur des côtés opposés du cadre (20) ; et/ou
- sont agencées sur deux côtés du cadre (20) adjacents formant un angle.
